(19) Europäisches Patentamt
European Patent Office
Office européen des brevets

(11) EP 4 410 552 A1

(12) EUROPEAN PATENT APPLICATION
published in accordance with Art. 153(4) EPC

(43) Date of publication:
**07.08.2024 Bulletin 2024/32**

(21) Application number: **22872523.0**

(22) Date of filing: **11.07.2022**

(51) International Patent Classification (IPC):
***B41J 2/01*** *(2006.01)* ***C09D 11/322*** *(2014.01)*
***C09D 11/38*** *(2014.01)* ***B41M 5/00*** *(2006.01)*

(52) Cooperative Patent Classification (CPC):
**B41J 2/01; B41M 5/00; C09D 11/322; C09D 11/38**

(86) International application number:
**PCT/JP2022/027320**

(87) International publication number:
**WO 2023/047767 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021157230**
**25.03.2022 JP 2022050285**

(71) Applicant: **FUJIFILM Corporation**
**Tokyo 106-8620 (JP)**

(72) Inventors:
- **SHIRAKI, Fumiya**
**Ashigarakami-gun, Kanagawa 258-8577 (JP)**
- **ARAI, Takuya**
**Ashigarakami-gun, Kanagawa 258-8577 (JP)**
- **WACHI, Naotaka**
**Ashigarakami-gun, Kanagawa 258-8577 (JP)**

(74) Representative: **Klunker IP Patentanwälte PartG mbB**
**Destouchesstraße 68**
**80796 München (DE)**

# (54) INKJET INK AND IMAGE RECORDING METHOD

(57) Provided are an ink jet ink including water, a pigment, and at least one of resin particles or wax particles, in which the inkjet ink has a pH of 7.2 to 11, and Inequality (X) is satisfied, and an image recording method. In Inequality (X), ORPi represents an oxidation-reduction potential of the ink jet ink in units of mV, which is measured under a condition for a device in which an oxidation-reduction potential of water with a pH of 6.2 is 310 mV, and pHi represents the pH of the ink jet ink.

$$ORPi - [285 - 59 \times (pHi - 6.2)] \geq 0 \text{ Inequality (X)}$$

EP 4 410 552 A1

## Description

## BACKGROUND OF THE INVENTION

1. Field of the Invention

The present disclosure relates to an inkjet ink and an image recording method.

2. Description of the Related Art

In the related art, various examinations have been conducted on image recording carried out using an ink jet method (that is, an image recording method of jetting an ink from a recording head of an ink jet recording device to apply the ink onto a recording medium) and an ink used for this image recording (hereinafter, also referred to as "inkjet ink").

For example, JP2015-063574A discloses, as an ink that is unlikely to reduce the thickness of a protective layer and unlikely to degrade a resin member in a case of being used in an inkjet recording device which includes a recording head having a protective layer, and a resin member coming into contact with the ink, an ink that is used in an ink jet recording device including a recording head (that is, an inkjet head) in which at least a part of a member coming into contact with the ink is formed of at least one material selected from the group consisting of silicon, silicon oxide, silicon nitride, and silicon carbide, and a resin member coming into contact with the ink and that contains a pigment, soluble copper ions, and a specific compound having a bipyridine structure.

Further, JP2003-165936A discloses, as an inkjet ink having excellent dispersion stability and dissolution stability without causing a change in the size of ink droplets, a change in the drop velocity of ink droplets, occurrence of jetting failure, and the like, an aqueous ink that is used in an ink jet printer in which at least a part of a member coming into contact with the ink is formed of silicon, glass, or a film in which any one of an oxide, a nitride, a metal, or an organic compound is provided on the silicon, the glass, or the like and that has a zeta potential of 0 to - 50 mV between a coloring material and a member having a pH of 6.5 to 11.5.

Further, JP2016-044236A discloses, as an ink that contains a resin effective for increasing the fastness of an image to be recorded, suppresses elution of a silicon compound from a recording head (that is, an ink jet head), has satisfactory jetting stability and storage stability, and is capable of recording an ink with a high optical density, an ink that is used for an ink jet recording method of jetting an ink from a recording head to record an image on a recording medium using a recording head in which at least a part of a member coming into contact with the ink is formed of silicon or a silicon compound and that contains a self-dispersing pigment in which a phosphonic acid group is bonded to a surface of a particle directly or via another atomic group, a resin containing an anionic group, and a specific compound containing an amino group.

Further, JP2011-063000A discloses, as an image forming method that enables suppression of deterioration of a head member (particularly, a head plate or an ink flow passage) and stable formation of a high-definition image for a long period of time in a case of image formation using an ink jet head having an ink circulation system, an image forming method including a step of jetting an ink composition containing at least one silicon compound from an inkjet head including an ink circulation device that includes a plurality of liquid droplet jetting elements, a common flow passage communicating with each of the plurality of liquid droplet jetting elements via a supply path, and a common circulation path communicating with each of the plurality of liquid droplet jetting elements via a reflux path, supplies an ink composition to the plurality of liquid droplet jetting elements from the common flow passage, and circulates the ink composition to the common circulation path.

Further, JP2011-111527A discloses, as an aqueous ink composition that has excellent jettability in a long period of time and is capable of suppressing shape deformation of an ink jet head member and deterioration of liquid repellency, an aqueous ink composition that contains a coloring material containing at least one selected from an azo pigment having a specific structure, a tautomer thereof, a salt thereof, and a hydrate thereof, a dispersing agent, and colloidal silica.

## SUMMARY OF THE INVENTION

Meanwhile, in a case where an image is recorded by jetting an inkjet ink from an inkjet head using an alkaline (for example, a pH of 7.2 or greater) ink jet ink and an inkjet head having an ink flow passage wall containing silicon, the ink flow passage wall containing silicon may be etched by the alkaline inkjet ink.

From the viewpoint of jettability of the ink jet ink, it may be required to suppress the ink flow passage wall from being etched.

An object of one aspect of the present disclosure is to provide an ink jet ink that is jetted from an ink jet head having an ink flow passage wall containing silicon and is capable of suppressing the ink flow passage wall from being etched, and an image recording method using the ink jet ink.

Specific means for achieving the above-described objects includes the following aspects.

<1> An inkjet ink which is jetted from an inkjet head having an ink flow passage wall containing silicon, the ink jet ink comprising: water; a pigment; and at least one of resin particles or wax particles, in which the inkjet ink has a pH of 7.2 to 11, and Inequality (X) is satisfied,

$$ORPi - [285 - 59 \times (pHi - 6.2)] \geq 0 \text{ Inequality (X)}$$

in Inequality (X), ORPi represents an oxidation-reduction potential of the ink jet ink in units of mV, which is measured under a condition for a device in which an oxidation-reduction potential of water with a pH of 6.2 is 310 mV, and pHi represents the pH of the inkjet ink.

<2> The ink jet ink according to <1>, further comprising: an oxidant.

<3> The inkjet ink according to <2>, in which the oxidant includes at least one selected from the group consisting of hydrogen peroxide and a peroxide.

<4> The ink jet ink according to <2> or <3>, in which the oxidant includes at least one selected from the group consisting of hydrogen peroxide, peracetic acid, sodium percarbonate, and urea hydrogen peroxide.

<5> The ink jet ink according to any one of <2> to <4>, in which a mass ratio of a content of the oxidant to a total content of the resin particles and the wax particles is in a range of 0.02% by mass to 6% by mass.

<6> The inkjet ink according to any one of <1> to <5>, further comprising: colloidal silica.

<7> The ink jet ink according to any one of <1> to <6>, further comprising: an organic solvent having a Clog P value of 1.0 to 3.5.

<8> The ink jet ink according to <7>, in which the organic solvent having a Clog P value of 1.0 to 3.5 is at least one selected from the group consisting of a compound represented by Formula 1 and a compound represented by Formula 2.

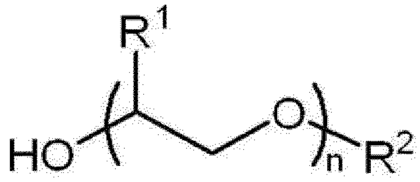 (1) 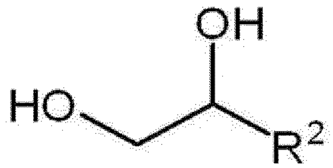 (2)

In Formula 1 or 2, $R^1$'s each independently represent a hydrogen atom or a methyl group, $R^2$'s each independently represent a linear or branched hydrocarbon group having 4 to 9 carbon atoms, or an aryl group having 6 to 10 carbon atoms, and n represents an integer of 1 to 3.

<9> The inkjet ink according to any one of <1> to <8>, further comprising: a dispersing agent, in which the dispersing agent is crosslinked.

<10> The ink jet ink according to any one of <1> to <9>, in which the resin particles contain a resin having a structural unit represented by Formula 3.

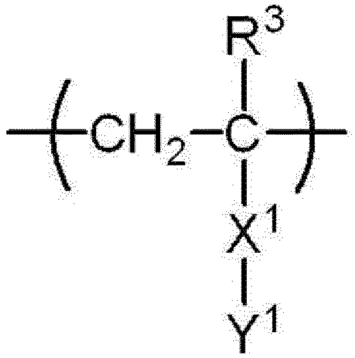 (3)

In Formula 3, $R^3$ represents a hydrogen atom or an alkyl group having 1 to 4 carbon atoms, $X^1$ represents a divalent linking group, $Y^1$ represents an anionic group, and an atom farthest from a main chain between $X^1$ and $Y^1$ is separated from the main chain by a distance of 4 atoms to 27 atoms.

<11> The inkjet ink according to any one of <1> to <10>, further comprising: cellulose nanofibers.

<12> The ink jet ink according to <11>, in which the cellulose nanofibers have an average fiber width of 1 nm or greater and 10 nm or less.

<13> The inkjet ink according to <11> or <12>, in which the cellulose nanofibers have an average fiber length of 10 nm or greater and 1000 nm or less.

<14> The ink jet ink according to any one of <11> to <13>, in which the cellulose nanofibers are TEMPO-oxidized cellulose nanofibers.

<15> The ink jet ink according to any one of <11> to <14>, in which a mass ratio of a content of the cellulose nanofibers to a total content of the resin particles and the wax particles is in a range of 1.00% by mass to 10.00% by mass.

<16> The ink jet ink according to any one of <11> to <15>, in which a content of the cellulose nanofibers is in a range of 0.01% by mass to 1.00% by mass with respect to a total amount of the ink jet ink.

<17> The ink jet ink according to any one of <11> to <16>, in which a viscosity measured under conditions of 30°C and 100 rpm is in a range of 3.8 mPa·s to 6.0 mPa·s.

<18> An image recording method comprising: a step of jetting the inkjet ink according to any one of <1> to <17> from an ink jet head having an ink flow passage wall containing silicon to apply the inkjet ink onto a recording medium.

According to one aspect of the present disclosure, it is possible to provide an ink jet ink that is jetted from an ink jet head having an ink flow passage wall containing silicon and is capable of suppressing the ink flow passage wall from being etched, and an image recording method using the inkjet ink.

## DESCRIPTION OF THE PREFERRED EMBODIMENTS

In the present disclosure, a numerical range shown using "to" indicates a range including the numerical values described before and after "to" as a lower limit and an upper limit.

In the present disclosure, in a case where a plurality of substances corresponding to respective components in a composition are present, the amount of the respective components in the composition indicates the total amount of the plurality of substances present in the composition unless otherwise specified.

In a numerical range described in a stepwise manner in the present disclosure, an upper limit or a lower limit described in a certain numerical range may be replaced with an upper limit or a lower limit in another numerical range described in a stepwise manner or a value described in an example.

In the present disclosure, the meaning of the term "step" includes not only an independent step but also a step whose intended purpose is achieved even in a case where the step is not clearly distinguished from other steps.

In the present disclosure, a combination of preferred embodiments is a more preferred embodiment.

In the present disclosure, the concept of "(meth)acryl" includes both acryl and methacryl, and the concept of "(meth)acrylate" includes both acrylate and methacrylate.

[Ink jet ink]

An inkjet ink of the present disclosure (hereinafter, also simply referred to as "ink") is an ink jet ink which is jetted from an ink jet head having an ink flow passage wall containing silicon, the ink jet ink containing water, a pigment, and at least one of resin particles or wax particles (hereinafter, also referred to as "resin particles and/or wax particles"), in which the ink jet ink has a pH of 7.2 to 11, and Inequality (X) is satisfied.

$$\mathrm{ORPi} - [285 - 59 \times (\mathrm{pHi} - 6.2)] \geq 0 \quad \text{Inequality (X)}$$

In Inequality (X), ORP represents an oxidation-reduction potential of the inkjet ink in units of mV, which is measured under a condition for a device in which an oxidation-reduction potential of water with a pH of 6.2 is 310 mV, and pH represents the pH of the inkjet ink.

As described above, in a case where an image is recorded by jetting an ink jet ink from an ink jet head using an alkaline (for example, a pH of 7.2 or greater) ink jet ink and an inkjet head having an ink flow passage wall containing silicon of the related art, the ink flow passage wall containing silicon may be etched by the alkaline ink jet ink.

In a case where the ink flow passage wall is etched, the jettability of the ink from the inkjet head may be impaired, and thus it is desirable to suppress the ink flow passage wall from being etched.

Although the ink of the present disclosure is an alkaline ink, etching of the ink flow passage wall containing silicon in the inkjet head can be suppressed.

Specifically, in the ink of the present disclosure, in a case where the ink contains at least one of resin particles or wax particles and the ink satisfies Inequality (X) (that is, the oxidation-reduction potential ORPi of the ink is greater

than or equal to "285 - 59 × (pHi - 6.2)"), etching of the ink flow passage wall containing silicon in the inkjet head can be suppressed.

The reason why such an effect is exhibited is assumed as follows.

In the ink of the present disclosure, it is considered that in a case where the ink satisfies Inequality (X), the formation of an oxide film (that is, a silicon oxide film) on the surface of the ink flow passage wall containing silicon is promoted, the ink flow passage wall is protected by the silicon oxide film, and thus the etching of the ink flow passage wall is suppressed.

Further, in the ink of the present disclosure, it is considered that in a case where the resin particles and/or the wax particles in the ink function as a buffer member, the pigment in the ink suppresses the ink flow passage wall from being polished, and as a result, etching caused by polishing scratches of the ink flow passage wall is suppressed.

<pH>

The ink of the present disclosure has a pH (that is, pHi in Inequality (X)) of 7.2 to 11. That is, the ink of the present disclosure is an alkaline ink.

As described above, the ink flow passage wall can be etched in a case of the alkaline ink of the related art, but the problem of etching of the ink flow passage wall is solved in a case of the ink of the present disclosure.

It is advantageous that the pH of the ink is in a range of 7.2 to 11 in terms of the storage stability of the ink.

The pH of the ink is preferably in a range of 7.5 to 10 and more preferably in a range of 8.0 to 9.5.

In the present disclosure, the pH denotes a value measured at a temperature of 25°C using a pH meter (for example, product name "WM-50EG", manufactured by DKK-TOA

CORPORATION).

<Inequality (X)>

The ink of the present disclosure satisfies Inequality (X).

$$ORPi - [285 - 59 \times (pHi - 6.2)] \geq 0 \quad \text{Inequality (X)}$$

In Inequality (X), ORPi represents an oxidation-reduction potential of the inkjet ink in units of mV, which is measured under a condition for a device in which an oxidation-reduction potential of water with a pH of 6.2 is 310 mV, and pHi represents the pH of the inkjet ink.

In the present disclosure, ORPi denotes a value calibrated such that the oxidation-reduction potential of water with a pH of 6.2 is 310 mV and measured using an oxidation-reduction potential measuring device (for example, ORP Tester 10, manufactured by EUTECH).

A specific method for making the ink satisfy Inequality (X) is not particularly limited.

For example, the ink can be adjusted to satisfy Inequality (X) by adjusting the kind and the content of each of the components contained in the ink.

The value of "ORPi - [285 - 59 × (pHi - 6.2)]" is 0 or greater as shown in Inequality (X).

From the viewpoint of further suppressing the ink flow passage wall from being etched, the value of "ORPi - [285 - 59 × (pHi - 6.2)]" is preferably 5.0 or greater and more preferably 10 or greater.

The upper limit of the value of "ORPi - [285 - 59 × (pHi - 6.2)]" is not particularly limited, and the upper limit thereof may be, for example, 30.

<Inkjet head>

The ink of the present disclosure is jetted from an ink jet head having an ink flow passage wall that contains silicon.

It is preferable that the ink flow passage wall of the inkjet head is formed of a siliconcontaining member.

Such an ink jet head is not particularly limited, and for example, the ink jet heads described in known documents such as JP2015-063574A, JP2003-165936A, JP2016-044236A, JP2011-063000A, JP2011-111527A, and JP4902711B can be appropriately referred to.

<Water>

The ink of the present disclosure contains water (A).

The content of water is preferably 10% by mass or greater, more preferably 30% by mass or greater, still more preferably 50% by mass or greater, and even still more preferably 60% by mass or greater with respect to the total

amount of the ink according to the present disclosure.

The upper limit of the content of water with respect to the total amount of the ink according to the present disclosure depends on the amount of other components, but is, for example, 99% by mass, 90% by mass, or 80% by mass.

<Pigment>

The ink of the present disclosure contains a pigment.

The kind of pigment is not particularly limited, and any of an organic pigment or an inorganic pigment may be used.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

From the viewpoint of the jettability of the ink, the content of the pigment is preferably in a range of 0.5% by mass to 15% by mass and more preferably in a range of 1% by mass to 10% by mass with respect to the total amount of the ink.

<Resin particles and/or wax particles>

The ink of the present disclosure contains resin particles and/or wax particles.

In a case where the ink of the present disclosure contains resin particles, the ink may contain only one or two or more kinds of resin particles. Further, in a case where the ink of the present disclosure contains resin particles, the resin particles contained in the ink may be dispersed in the ink by a dispersing agent for resin particles.

In a case where the ink of the present disclosure contains wax particles, the ink may contain only one or two or more kinds of wax particles. Further, in a case where the ink of the present disclosure contains wax particles, the wax particles contained in the ink may be dispersed in the ink by a dispersing agent for wax particles.

The total content of the resin particles and the wax particles in the ink of the present disclosure is preferably in a range of 0.5% by mass to 20% by mass, more preferably in a range of 1% by mass to 10% by mass, and still more preferably in a range of 1.5% by mass to 8% by mass with respect to the total amount of the ink.

(Resin particles)

The resin particles contain a resin and may contain a core material or the like other than the resin, but it is preferable that the resin particles consist of only the resin.

- Structural unit (c1) -

It is preferable that the resin particles contain a resin having a structural unit represented by Formula 3 (hereinafter, also referred to as "structural unit (c1)").

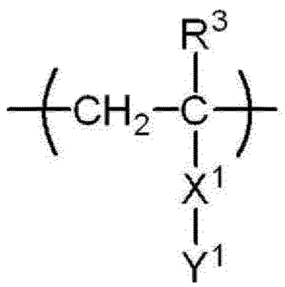

(3)

In Formula 3, $R^3$ represents a hydrogen atom or an alkyl group having 1 to 4 carbon atoms, $X^1$ represents a divalent linking group, $Y^1$ represents an anionic group, and an atom farthest from a main chain between $X^1$ and $Y^1$ is separated from the main chain by a distance of 4 atoms to 27 atoms. In a case where the distance between the main chain and the atom farthest from the main chain is 4 atoms or more from the main chain, the hydrophobicity of the structural unit c1 increases, and thus the hydrophobicity of the entirety of the resin particles increases. In this manner, after the ink droplets land on the recording medium, the resin particles contained in the ink droplets are easily fixed on the recording medium, and the landing interference is suppressed. Therefore, it is considered that an image with excellent graininess can be obtained by using the ink of the present disclosure. Further, it is considered that since the hydrophobicity of the entirety of the resin particles is high, the resin particles are unlikely to swell, and the ink according to the present

disclosure has excellent jettability.

Meanwhile, it is considered that in a case where the distance between the main chain and the atom farthest from the main chain is 27 atoms or less from the main chain, the hydrophobicity of the entirety of the resin particles is not extremely high, and the jettability is excellent. Further, from the viewpoints of availability of raw materials and manufacturing suitability, the distance between the main chain and the atom farthest from the main chain between X1 and Y1 is preferably 27 atoms or less from the main chain.

In Formula 3, it is preferable that $R^3$ represents a hydrogen atom or a methyl group.

In Formula 3, $X^1$ represents preferably a group selected from the group consisting of - C(=O)O-, $-C(=O)NR^4-$, an alkylene group, and an arylene group or a divalent group obtained by combining two or more selected from these groups and more preferably a group selected from the group consisting of -C(=O)O-, $-C(=O)NR^4-$, an alkylene group having 6 to 22 carbon atoms, and an arylene group having 6 to 20 carbon atoms or a divalent group obtained by combining two or more selected from these groups.

In a case where $X^1$ represents -C(=O)O- or $-C(=O)NR^4-$, it is preferable that the carbon atom to which $R^3$ in Formula 3 is bonded and the carbon atom in -C(=O)O- or $-C(=O)NR^4-$(excluding the carbon atom contained in $R^4$) are directly bonded to each other.

$R^4$ represents a hydrogen atom or an alkyl group having 1 to 4 carbon atoms, preferably a hydrogen atom or a methyl group, and more preferably a hydrogen atom.

In Formula 3, $Y^1$ represents preferably -C(=O)OM, $-S(=O)_2OM$, or $-OP(=O)(OM)_2$ and more preferably -C(=O)OM.

M represents a hydrogen atom, an alkali metal, or quaternary ammonium. M may be bonded or dissociated. From the viewpoint of dispersion stability of the resin particles in the ink, it is preferable that M represents an alkali metal. Examples of the alkali metal include sodium and potassium. The resin particles in which M represents an alkali metal are obtained by substituting the hydrogen atom using a hydrogen carbonate of an alkali metal, a carbonate of an alkali metal, sodium hydroxide, potassium hydroxide, or the like, for example, in a step of synthesizing the resin particles using a monomer in which $Y^1$ represents -C(=O)OH.

In Formula 3, from the viewpoint of improving the j ettability of the ink and obtaining an image with more excellent graininess, the atom farthest from the main chain between $X^1$ and $Y^1$ is separated from the main chain by a distance of preferably in a range of 10 atoms to 23 atoms and more preferably in a range of 12 atoms to 20 atoms from the main chain.

The structural unit c1 is preferably a structural unit represented by Formula 4 or 5 and more preferably a structural unit represented by Formula 4.

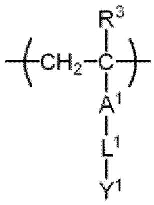 (4) 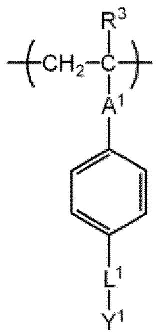 (5)

In Formula 4 or 5, $R^3$'s each independently represent a hydrogen atom or an alkyl group having 1 to 4 carbon atoms, $A^1$'s each independently represent a single bond, -C(=O)O-, or - $C(=O)NR^4-$, $R^4$ represents a hydrogen atom or an alkyl group having 1 to 4 carbon atoms, $L^1$'s each independently represent a divalent linking group having 6 to 22 carbon atoms, $Y^1$ represents an anionic group, and the atom farthest from the main chain between $L^1$ and $Y^1$ is separated by a distance of 4 atoms to 27 atoms from the main chain.

In Formula 4 or 5, $R^3$ has the same definition as that for $R^3$ in Formula 3, and the preferable aspects thereof are the same as described above.

In Formula 4, it is preferable that $A^1$ represents -C(=O)O- or $-C(=O)NR^4-$. In Formula 5, it is preferable that $A^1$ represents a single bond.

In Formula 4 or 5, the direction of the bond of -C(=O)O- or $-C(=O)NR^4-$ is not particularly limited, but it is preferable that the carbon atoms in -C(=O)O- or $-C(=O)NR^4-$ and the carbon atom to which $R^3$ in Formula 4 or 5 is bonded are directly bonded to each other.

$R^4$ represents preferably a hydrogen atom or a methyl group and more preferably a hydrogen atom.

In Formula 4, it is preferable that $L^1$ represents an alkylene group having 6 to 22 carbon atoms. The alkylene group may be linear or branched, but it is preferable that the alkylene group is linear from the viewpoint of the jettability

of the ink. $L^1$ represents preferably an alkylene group having 8 to 22 carbon atoms, more preferably an alkylene group having 8 to 16 carbon atoms, and still more preferably an alkylene group having 10 to 12 carbon atoms.

In Formula 5, it is preferable that $L^1$ represents a divalent linking group having 6 to 20 carbon atoms. The divalent linking group is not particularly limited, but from the viewpoint of synthetic suitability, $-C(=O)NR^4-(CH_2)_n-$ or $-C(=O)O-(CH_2)_n-$ is preferable, and $-C(=O)NR^4-(CH_2)_n-$ is more preferable. $R^4$ represents a hydrogen atom or an alkyl group having 1 to 4 carbon atoms, preferably a hydrogen atom or a methyl group, and more preferably a hydrogen atom. Further, n represents an integer of 5 to 18, more preferably 7 to 15, and still more preferably 10 to 12.

In Formula 4 or 5, $Y^1$'s each independently represent preferably $-C(=O)OM$, $-S(=O)_2OM$, or $-OP(=O)(OM)_2$ and more preferably $-C(=O)OM$.

M represents a hydrogen atom, an alkali metal, or quaternary ammonium. M may be bonded or dissociated. From the viewpoint of dispersion stability of the resin particles in the ink, it is preferable that M represents an alkali metal. Examples of the alkali metal include sodium and potassium.

In Formula 4 or 5, from the viewpoint of improving the j ettability of the ink and obtaining an image with more excellent graininess, the atom farthest from the main chain between $L^1$ and $Y^1$ is separated by a distance of preferably 10 atoms to 23 atoms more preferably 12 atoms to 20 atoms from the main chain.

Hereinafter, preferred specific examples of the structural unit c1 are shown, but the structural unit c1 is not limited to such specific examples. In the specific examples, n represents the repetition number, and R represents a hydrogen atom or an alkyl group having 1 to 4 carbon atoms.

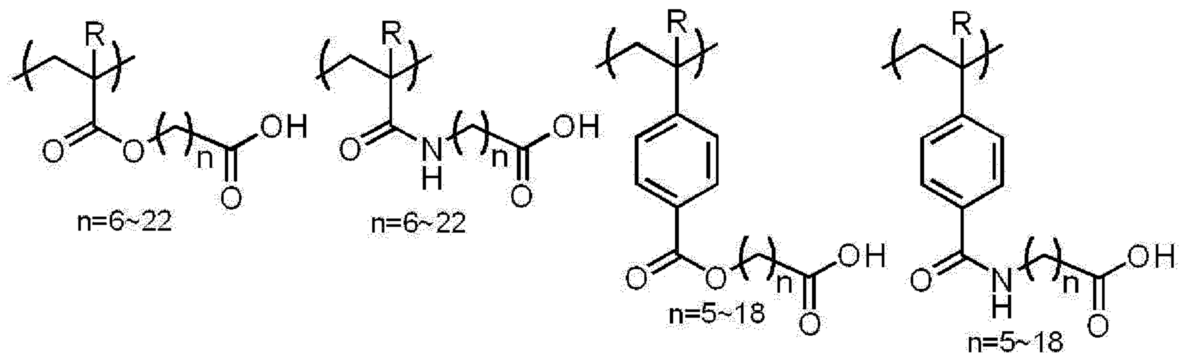

n=6~22 n=6~22 n=5~18 n=5~18

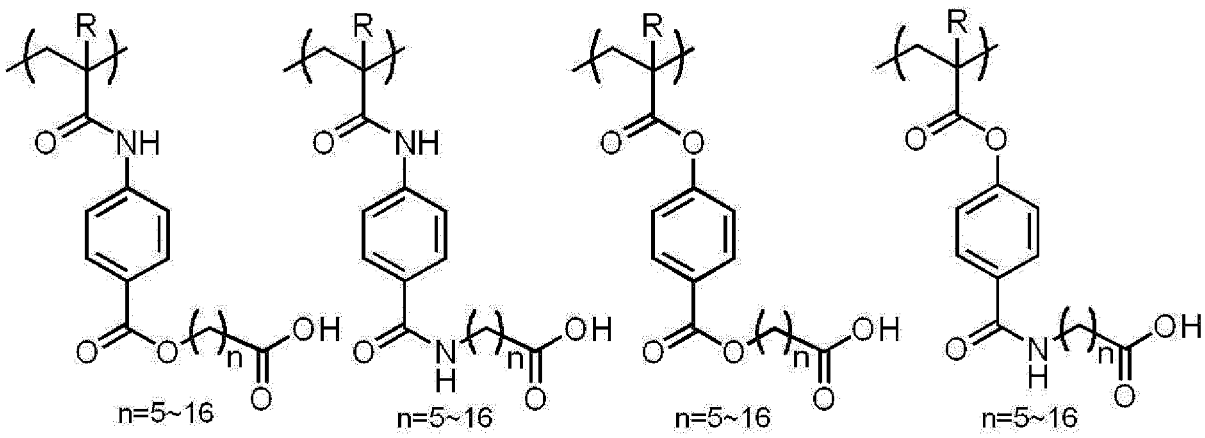

n=5~16 n=5~16 n=5~16 n=5~16

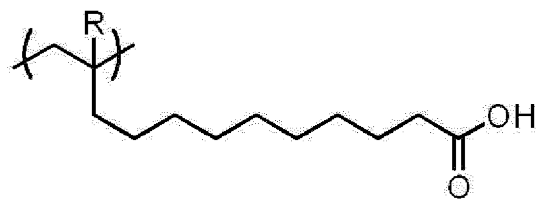

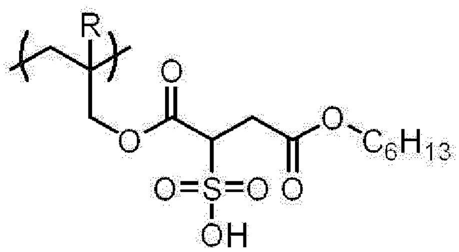

The content of the structural unit c1 is in a range of 1% by mass to 20% by mass with respect to the total mass

of the resin. From the viewpoint of the jettability of the ink, the content thereof is preferably in a range of 1.5% by mass to 18% by mass and more preferably in a range of 2% by mass to 12% by mass.

In the present disclosure, the resin may contain only one or two or more kinds of structural units c1. In a case where the resin contains two or more kinds of structural units c1, the above-described content denotes the total content of two or more kinds of structural units c1.

The structural unit c1 is a structural unit derived from a monomer containing an anionic group and is highly hydrophobic due to a relatively long side chain. The hydrophobicity of the entirety of resin particles increases as the hydrophobicity of the structural unit derived from an anionic group-containing monomer increases. In this manner, after the ink droplets land on the recording medium, the resin particles contained in the ink droplets are easily fixed on the recording medium, and the landing interference is suppressed. Therefore, it is considered that an image with excellent graininess can be obtained by using the ink of the present disclosure. Further, it is considered that since the hydrophobicity of the entirety of the resin particles is high, the resin particles are unlikely to swell, and the ink according to the present disclosure has excellent jettability.

In the present disclosure, the content of the structural unit c1 is in a range of 1% by mass to 20% by mass with respect to the total mass of the resin, but the kind of structural unit other than the structural unit c1 is not particularly limited. In general, the physical properties of the entire resin are considered to be changed depending on the kind of each structural unit constituting the resin. However, the present inventors found that the jettability of the ink is improved and an image with excellent graininess is obtained as described above because the structural unit derived from a monomer containing an anionic group is the structural unit c1.

- Structural unit c2 -

It is preferable that the resin further contains a structural unit c2 derived from an ethylenically unsaturated compound having an aromatic ring structure or an alicyclic structure (hereinafter, also simply referred to as "structural unit c2") as a structural unit other than the structural unit c1.

Examples of the ring contained in the structural unit c2 include a benzene ring, a naphthalene ring, an anthracene ring, and an aliphatic hydrocarbon ring having 5 to 20 carbon atoms. Among these, a benzene ring or an aliphatic hydrocarbon ring having 6 to 10 carbon atoms is preferable as the ring contained in the structural unit c2. These rings may have substituents on the rings.

The ethylenically unsaturated compound having an aromatic ring structure or an alicyclic structure is preferably an ethylenically unsaturated compound containing an ethylenically unsaturated group at the terminal of the compound, more preferably styrene, styrene having a substituent, a (meth)acrylate compound, or a (meth)acrylamide compound, and still more preferably styrene, styrene having a substituent, or a (meth)acrylate compound.

From the viewpoint of improving the rub resistance of the image to be obtained, it is preferable that the structural unit c2 is at least one selected from the group consisting of structural units represented by Formulae A to F. Further, from the viewpoint of further improving the jettability of the ink, it is more preferable that the structural unit c2 includes a structural unit represented by Formula A.

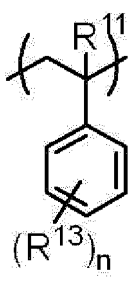
(A)

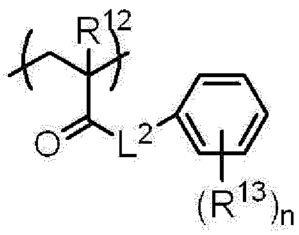
(B)

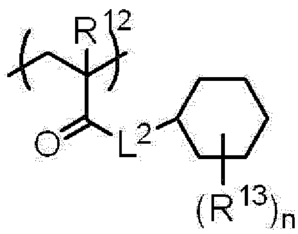
(C)

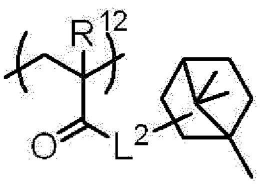

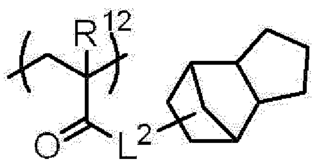

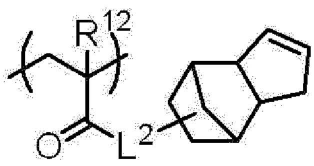

(D) (E) (F)

In Formulae A to F, $R^{11}$ and $R^{12}$ each independently represent a hydrogen atom or a methyl group. $R^{13}$'s each independently represent a linear or branched alkyl group having 1 to 10 carbon atoms. n's each independently represent an integer of 0 to 5. $L^2$'s each independently represent a divalent group selected from the group consisting of an alkylene group having 1 to 18 carbon atoms, an arylene group having 6 to 18 carbon atoms, -O-, -NH-, - S-, and -C(=O)-, a divalent group formed by combining two or more groups selected from these groups, or a single bond.

In Formula A, it is preferable that $R^{11}$ represents a hydrogen atom.

In Formulae B to F, it is preferable that $R^{12}$ represents a methyl group.

In Formulae A to C, $R^{13}$'s each independently represent preferably a linear or branched alkyl group having 1 to 4 carbon atoms and more preferably a methyl group or an ethyl group.

In Formulae A to C, n represents preferably an integer of 0 to 2, more preferably 0 or 1, and still more preferably 0.

In Formula B, $L^2$ represents preferably a divalent linking group containing at least -O-or -NH- at the bonding site between the carbonyl group described in Formula B and the carbon atom bonded thereto, more preferably a divalent linking group containing at least -O- or -NH-and containing a linear or branched alkylene group that has 1 to 18 carbon atoms and may have a ring structure at the bonding site between the carbonyl group and the carbon atom bonded thereto, still more preferably $-OCH_2-$ or $-NHCH_2-$, and particularly preferably $-OCH_2-$.

In Formulae C to E, $L^2$ represents preferably a divalent linking group containing at least -O- or -NH- at the bonding site between the carbonyl group described in Formulae C to F and the carbon atom bonded thereto, more preferably -O- or -NH-, and still more preferably -O-.

Hereinafter, specific examples of the structural unit represented by Formula A will be shown, but the structural unit represented by Formula A is not limited to the following specific examples.

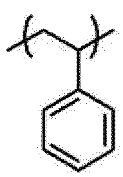

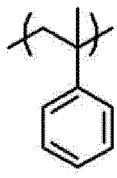

Hereinafter, specific examples of the structural unit represented by Formula B will be shown, but the structural unit represented by Formula B is not limited to the following specific examples.

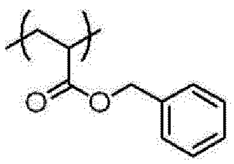

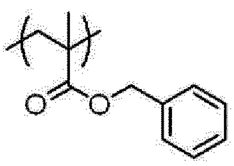

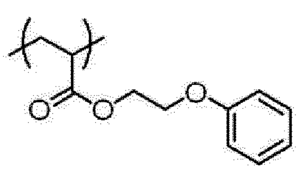

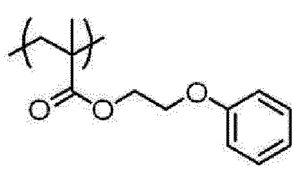

Hereinafter, specific examples of the structural unit represented by Formula C will be shown, but the structural unit represented by Formula C is not limited to the following specific examples.

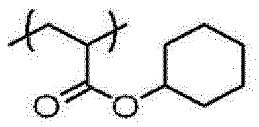

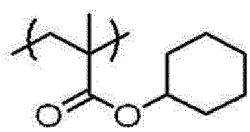

Hereinafter, specific examples of the structural unit represented by Formula D will be shown, but the structural unit represented by Formula D is not limited to the following specific examples.

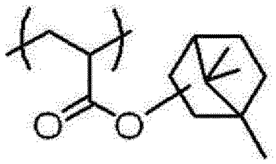
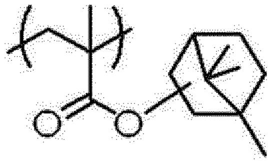

Hereinafter, specific examples of the structural unit represented by Formula E will be shown, but the structural unit represented by Formula E is not limited to the following specific examples.

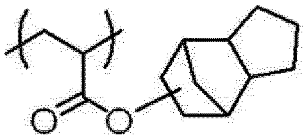
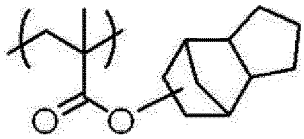

Hereinafter, specific examples of the structural unit represented by Formula F will be shown, but the structural unit represented by Formula F is not limited to the following specific examples.

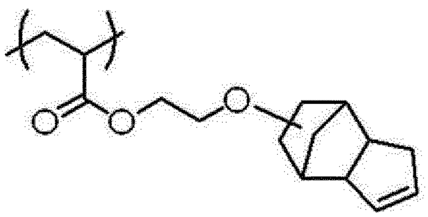
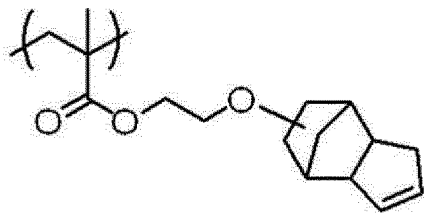

From the viewpoint of improving the jettability of the ink, the content of the structural unit c2 is preferably in a range of 5% by mass to 90% by mass and more preferably in a range of 10% by mass to 50% by mass with respect to the total mass of the resin.

The resin may have only one or two or more kinds of structural units c2. In a case where the resin has two or more kinds of structural units c2, the above-described content denotes the total content of two or more kinds of structural units c2.

- Other structural units c3 -

The resin may have other structural units c3 (hereinafter, also simply referred to as "structural unit c3") in addition to the structural unit c1 and the structural unit c2.

The structural unit c3 is not particularly limited, but is preferably a structural unit derived from a (meth)acrylamide compound or a (meth)acrylate compound and more preferably a structural unit derived from a (meth)acrylate compound. Further, it is preferable that the structural unit c3 does not contain an anionic group.

It is preferable that the structural unit c3 is a structural unit derived from an alkyl (meth)acrylate compound containing an alkyl group with 1 to 10 carbon atoms. The alkyl group may be linear or branched and may have a cyclic structure.

The resin may or may not have the structural unit c3. In a case where the resin has the structural unit c3, from the viewpoint of improving the jettability of the ink, the content of the structural unit c3 is preferably in a range of 10% by mass to 90% by mass, more preferably in a range of 30% by mass to 85% by mass, and still more preferably in a range of 50% by mass to 80% by mass with respect to the total mass of the resin.

The resin may have only one or two or more kinds of structural units c3. In a case where the resin has two or more kinds of structural units c3, the above-described content denotes the total content of two or more kinds of structural units c3.

(Characteristics of resin particles)

From the viewpoint of dispersibility of the resin particles, the content of the anionic group in the resin of the

resin particles is preferably in a range of 0.05 mmol/g to 0.7 mmol/g and more preferably in a range of 0.1 mmol/g to 0.4 mmol/g with respect to the total mass of the resin.

The weight-average molecular weight (Mw) of the resin is preferably in a range of 10000 to 1000000 and more preferably in a range of 20000 to 500000.

In the present disclosure, the weight-average molecular weight (Mw) indicates a value measured according to gel permeation chromatography (GPC) unless otherwise specified. The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 μl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

From the viewpoint of improving the rub resistance of the image, the glass transition temperature (Tg) of the resin is preferably in a range of 30°C to 120°C, more preferably in a range of 50°C to 100°C, and still more preferably in a range of 70°C to 100°C.

A measured Tg obtained by actual measurement is employed as the glass transition temperature (Tg). The measured Tg is measured under typical measurement conditions using a differential scanning calorimeter, for example, a differential scanning calorimeter (product name, "EXSTAR 6220", manufactured by SII Nanotechnology Inc.). However, a calculated Tg calculated by the following calculation equation is employed in a case where it is difficult to perform measurement due to decomposition or the like of the material. The calculated Tg is a value calculated by Equation 1.

$$1/Tg = \Sigma\,(Xi/Tgi) \cdots (1)$$

Here, it is assumed that the polymer as a target for calculation is formed by copolymerizing n kinds of monomer components (i represents 1 to n). Xi represents a mass fraction ($\Sigma Xi = 1$) of the i-th monomer and Tgi represents a glass transition temperature (absolute temperature) of a homopolymer of the i-th monomer. Here, Σ is obtained by summing 1 to n as i. Further, values in Polymer Handbook (3rd Edition) (written by J. Brandrup, E. H. Immergut (Wiley-Interscience, 1989)) are employed as the value (Tgi) of the glass transition temperature of the homopolymer of each monomer.

From the viewpoint of the j ettability of the ink, the volume average particle diameter of the resin particles is preferably in a range of 1 nm to 200 nm, more preferably in a range of 5 nm to 100 nm, and still more preferably in a range of 10 nm to 50 nm.

The volume average particle diameter is measured by a particle size distribution measuring device using light scattering, for example, a particle size distribution measuring device (product name, "MICROTRAC UPA (registered trademark) EX150", manufactured by NIKKISO CO., LTD.).

- Method of producing resin particles -

A method of producing the resin particles is not particularly limited, but it is preferable that the resin particles are prepared by an emulsion polymerization method. The emulsion polymerization method is a method of polymerizing an emulsion prepared by adding a monomer, a polymerization initiator, an emulsifier, and an additive such as a chain transfer agent as necessary to an aqueous medium (for example, water). In a case where the emulsion polymerization method is applied to the preparation of the resin particles, the monomer forming the structural unit c1 also functions as an emulsifier. Therefore, it is not necessary to separately add an emulsifier other than the monomer forming the structural unit c1, but a known emulsifier may be added separately unless the jettability of the ink and the image quality are degraded.

The polymerization initiator used for the method of producing the resin particles is not particularly limited, and examples thereof include an inorganic persulfate (such as potassium persulfate, sodium persulfate, or ammonium persulfate), an azo-based initiator (such as 2,2'-azobis(2-amidinopropane)dihydrochloride or 2,2'-azobis[2-methyl-N-(2-hydroxyethyl)-propionamide]), an organic peroxide (such as t-butyl peroxypivalate or t-butyl hydroperoxide), and salts thereof. The polymerization initiator may be used alone or in combination of two or more kinds thereof. Among these, an azo-based initiator or an organic peroxide is preferable as the polymerization initiator.

The amount of the polymerization initiator to be used is preferably in a range of 0.01% by mass to 2% by mass and more preferably in a range of 0.2% by mass to 1% by mass with respect to the total mass of the monomer.

Examples of the chain transfer agent used for the method of producing the resin particles include known compounds such as carbon tetrahalide, dimers of styrenes, dimers of (meth)acrylic acid esters, mercaptans, and sulfides. Among these, dimers of styrenes or mercaptans described in JP1993-17510A (JP-H5-17510A) are preferable as the chain transfer agent.

It is preferable that the resin particles are dispersed in the ink.

Further, it is preferable that the resin particles are self-dispersing resin particles. The self-dispersing resin particles are resin particles consisting of a water-insoluble resin that can enter a dispersed state in an aqueous medium due to a functional group (such as an anionic group) of the resin itself in a case where the resin particles enter a dispersed state using a phasetransfer emulsification method in the absence of a surfactant.

Here, the concept of the dispersed state includes both an emulsified state (emulsion) in which a water-insoluble resin is dispersed in an aqueous medium in a liquid state and a dispersed state (suspension) in which a water-insoluble resin is dispersed in the aqueous medium in a solid state.

Further, the term "water-insoluble" denotes that the amount of a substance to be dissolved in 100 parts by mass of water at 25°C is 5.0 parts by mass or less.

The resin particles do not function as a dispersing agent of a pigment. Further, the resin particles are present in the ink in the form of particles. Therefore, the resin particles are distinguished from the dispersing agent used in the present disclosure.

From the viewpoints of the storage stability of the ink and the rub resistance of the image to be obtained, the content of the resin particles is preferably in a range of 0.5% by mass to 20% by mass, more preferably in a range of 1% by mass to 10% by mass, and still more preferably in a range of 1.5% by mass to 8% by mass with respect to the total mass of the ink.

Specific examples of the resin contained in the resin particles are shown below, but the present disclosure is not limited thereto. In the following specific examples, n represents the repetition number, and the unit of % by mass denotes the content of each structural unit. It is preferable that the resin particles are resin particles consisting of resins shown in the following specific examples. Further, in all the following specific examples, the anionic groups are described to be in a state of an acid, but a part or the entirety of the acid may be a salt.

| | Structural unit c1 | Structural unit c2 | Structural unit c3 | Mw (10000) | Tg (°C) |
|---|---|---|---|---|---|
| C-1 | 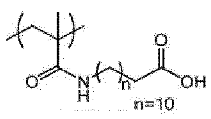 7% by mass | 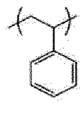 30% by mass | 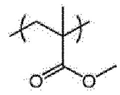 63% by mass | 25 | 96 |
| C-2 | 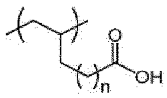 7% by mass n=7 | 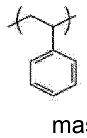 30% by mass | 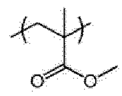 63% by mass | 26 | 94 |
| C-3 | 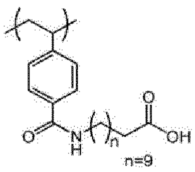 7% by mass | 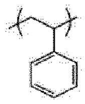 30% by mass | 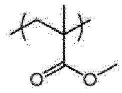 63% by mass | 28 | 96 |
| C-4 | 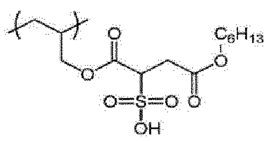 7% by mass | 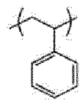 30% by mass | 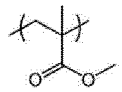 63% by mass | 22 | 95 |
| C-5 | 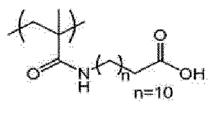 1% by mass | 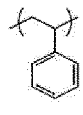 30% by mass | 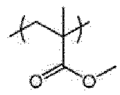 69% by mass | 27 | 103 |
| C-6 | 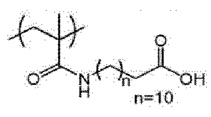 3% by mass | 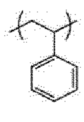 30% by mass | 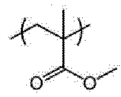 67% by mass | 22 | 101 |

(continued)

| | Structural unit c1 | Structural unit c2 | Structural unit c3 | Mw (10000) | Tg (°C) |
|---|---|---|---|---|---|
| C-7 | 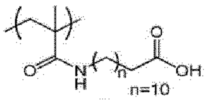 10% by mass | 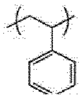 30% by mass | 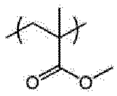 60% by mass | 21 | 94 |
| C-8 | 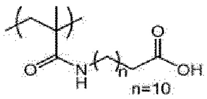 15% by mass | 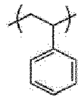 30% by mass | 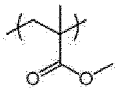 55% by mass | 24 | 89 |

| | Structural unit c1 | Structural unit c2 | Structural unit c3 | Mw (10000) | Tg (°C) |
|---|---|---|---|---|---|
| C-9 | 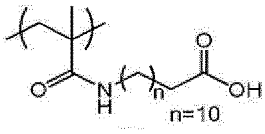 20% by mass | 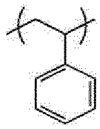 30% by mass | 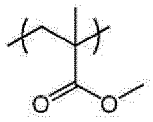 50% by mass | 28 | 84 |
| C-10 | 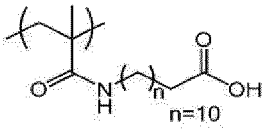 7% by mass | 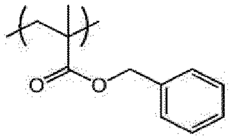 30% by mass | 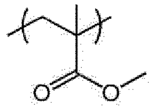 63% by mass | 30 | 83 |
| C-11 | 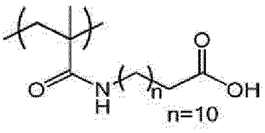 7% by mass | 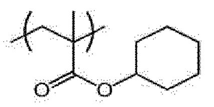 30% by mass | 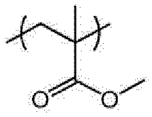 63% by mass | 22 | 78 |
| C-12 | 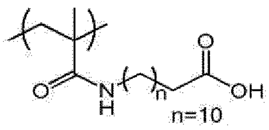 7% by mass | 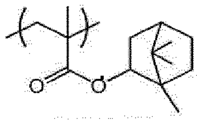 30% by mass | 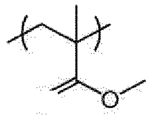 63% by mass | 25 | 115 |
| C-13 | 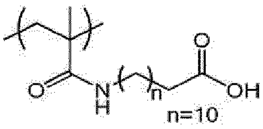 7% by mass | 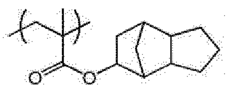 30% by mass | 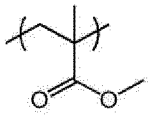 63% by mass | 20 | 118 |
| C-14 | 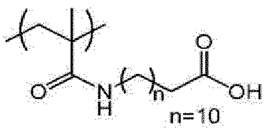 7% by mass | 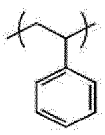 5% by mass | 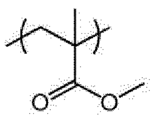 88% by mass | 28 | 98 |

(continued)

| | Structural unit c1 | Structural unit c2 | Structural unit c3 | Mw (10000) | Tg (°C) |
|---|---|---|---|---|---|
| C-15 | 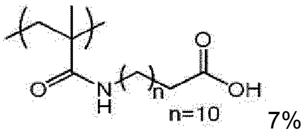 7% by mass | 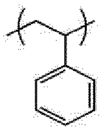 10% by mass | 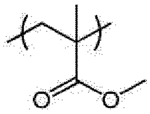 83% by mass | 20 | 98 |
| C-16 | 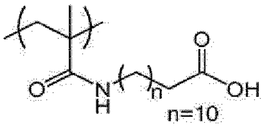 7% by mass | 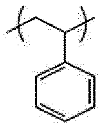 50% by mass | 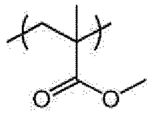 43% by mass | 15 | 95 |

| | Structural unit c1 | Structural unit c2 | Structural unit c3 | Mw (10000) | Tg (°C) |
|---|---|---|---|---|---|
| C-17 | 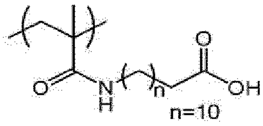 7% by mass | 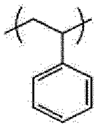 90% by mass | 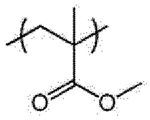 3% by mass | 18 | 93 |
| C-18 | 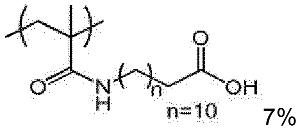 7% by mass | 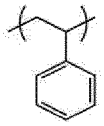 30% by mass | 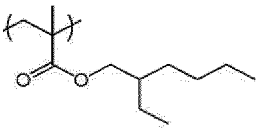 63% by mass | 23 | 24 |
| C-19 | 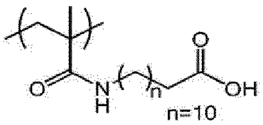 7% by mass | 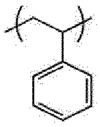 46% by mass | 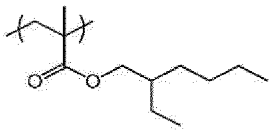 47% by mass | 25 | 42 |
| C-20 | 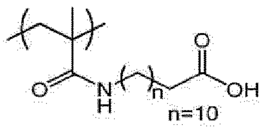 7% by mass | 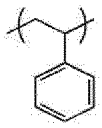 63% by mass | 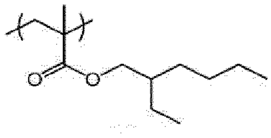 30% by mass | 28 | 60 |
| C-21 | 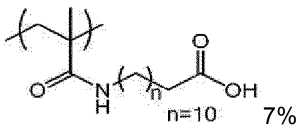 7% by mass | 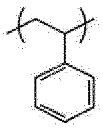 30% by mass | 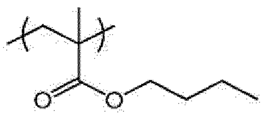 63% by mass | 15 | -4 |
| C-22 | 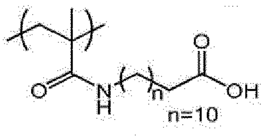 15% by mass | 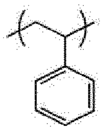 85% by mass | - | 23 | 86 |

| | Structural unit c1 | Structural unit c2 | | Structural unit c3 | | |
|---|---|---|---|---|---|---|
| C-23 | 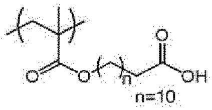 7% by mass | 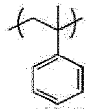 30% by mass | - | 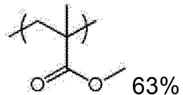 63% by mass | - | - |
| C-24 | 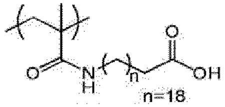 15% by mass | 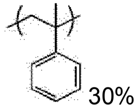 30% by mass | - | 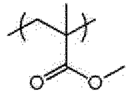 55% by mass | - | - |
| C-25 | 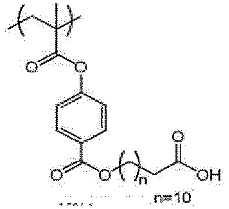 15% by mass | 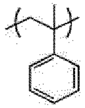 30% by mass | - | 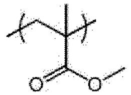 55% by mass | - | - |
| C-26 | 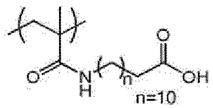 7% by mass | 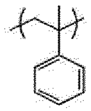 35% by mass | - | 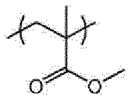 56.6% by mass | 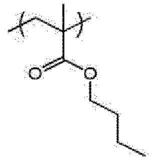 1.4% by mass | - |
| C-27 | 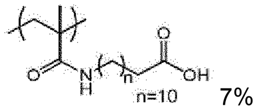 7% by mass | 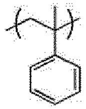 5% by mass | 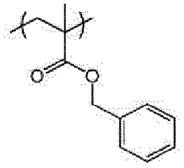 30% by mass | 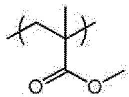 56.6% by mass | 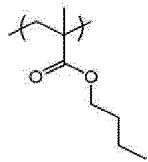 1.4% by mass | - |

(continued)

| | Structural unit c1 | Structural unit c2 | | Structural unit c3 | | |
|---|---|---|---|---|---|---|
| C-28 | 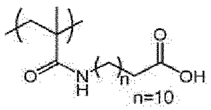 7% by mass | 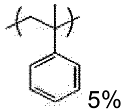 5% by mass | 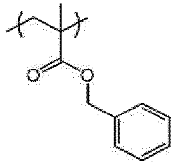 30% by mass | 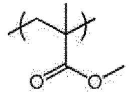 42.6% by mass | 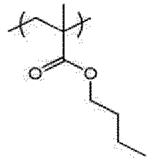 1.4% by mass | 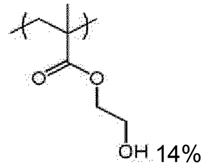 14% by mass |
| C-29 | 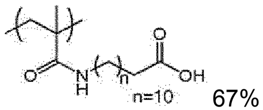 67% by mass | 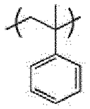 14% by mass | 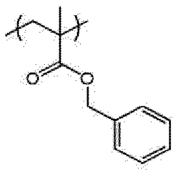 14% by mass | 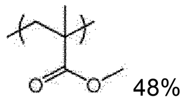 48% by mass | 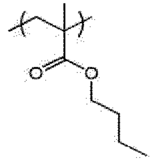 3 3% by mass | 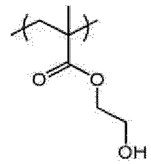 14% by mass |
| C-30 | 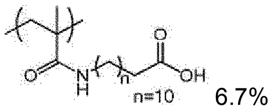 6.7% by mass | 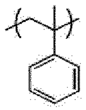 14% by mass | 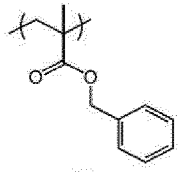 14% by mass | 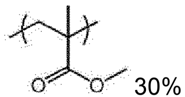 30% by mass | 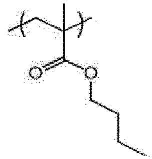 3.3% by mass | 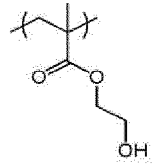 32% by mass |

In a case where the ink of the present disclosure contains resin particles, the ink of the present disclosure may be prepared using a commercially available resin emulsion (that is, an aqueous dispersion liquid of resin particles).

Examples of the commercially available resin emulsion include A-810 (Sansui Co., Ltd.), A-995 (Sansui Co., Ltd.), HIROS X NE-2186 (SEIKO PMC CORPORATION), HIROS X TE-1048 (SEIKO PMC CORPORATION), SAIVINOL SK-202 (Saiden Chemical Industry Co., Ltd.), TOCRYL W-1048 (TOYOCHEM CO., LTD.), WC-M-1217 (Arakawa Chemical industries, Ltd.), WC-M-1219 (Arakawa Chemical industries, Ltd.), N985 (A)-1 (Emulsion Technology Co., Ltd.), Neocryl A-1105 (DSM Coating Resins Ltd.), ACRIT SE-810A, ACRIT SE-953A-2, ACRIT SE-1658F, ACRIT SE-2974F, ACRIT SE-2978F (Taisei Fine Chemical Co., Ltd.), LACSTAR 7132-C (DIC Corporation), ST200 (Nippon Shokubai Co., Ltd.), and MOVINYL 972 (Japan Coating Resin Co., Ltd.).

(Wax particles)

The ink of the present disclosure may contain wax particles.

The melting point of the wax constituting the wax particles is preferably 40°C or higher and 140°C or lower, more preferably 45°C or higher and 100°C or lower, and still more preferably 50°C or higher and 95°C or lower.

Examples of the wax constituting the wax particles include natural waxes and synthetic waxes.

Examples of the natural wax include petroleum-based waxes, plant-based waxes, and animal-based waxes.

Examples of the petroleum-based waxes include paraffin wax, microcrystalline wax, and petrolatum.

Examples of the plant-based waxes include carnauba wax, candelilla wax, rice bran wax, and Japan wax.

Examples of the animal-based waxes include lanolin and beeswax.

Examples of the synthetic waxes include synthetic hydrocarbon-based waxes and modified waxes.

Examples of the synthetic hydrocarbon-based waxes include polyethylene wax and Fischer-Tropsch wax.

Examples of the modified waxes include a paraffin wax derivative, a montan wax derivative, a microcrystalline wax derivative, and a derivative thereof.

From the viewpoint of further improving the rub resistance of the image, carnauba wax is particularly preferable as the wax constituting the wax particles.

Examples of commercially available products of the wax particles include SELOSOL 524, TRASOL CN, TRASOL PF60, POLYRON L-787, and POLYRON P-502 (all manufactured by Chukyo Yushi Co., Ltd.), ITOHWAX E-210 (manufactured by Ito Oil Chemicals Co., Ltd.), NOPCOAT PEM17 (manufactured by San Nopco Ltd.), and AQUACER 515 (manufactured by BYK-Chemie Japan K.K.).

Further, examples of the wax particles also include an ester A described in paragraph 0254 of JP2011-162692A.

Among these, the carnauba wax is SELOSOL 524 and TRASOL CN.

Further, in regard to the preferable forms of the wax particles (organic solvents, dispersion stabilizers, and the like that can be used for dispersion of the wax particles), the description in paragraphs 0154 to 0170 of JP2011-162692A can be appropriately referred to.

<Oxidizing Agent>

It is preferable that the ink of the present disclosure contains at least one oxidant.

In this manner, etching of the ink flow passage wall can be further suppressed.

Examples of the oxidant include at least one selected from the group consisting of hydrogen peroxide and a peroxide.

Examples of the peroxide include peracetic acid, sodium percarbonate, and urea hydrogen peroxide.

It is preferable that the oxidant includes at least one selected from the group consisting of hydrogen peroxide, peracetic acid, sodium percarbonate, and urea hydrogen peroxide.

In this manner, etching of the ink flow passage wall can be further suppressed.

The mass ratio of the content of the oxidant to the total content of the resin particles and the wax particles is preferably in a range of 0.02% by mass to 6% by mass, more preferably in a range of 0.05% by mass to 4% by mass, and still more preferably in a range of 0.1% by mass to 2% by mass.

In a case where the content of the oxidant is 0.02% by mass or greater with respect to the total content of the resin particles and the wax particles, etching of the ink flow passage wall is further suppressed.

In a case where the content of the oxidant is 6% by mass or less with respect to the total content of the resin particles and the wax particles, the stability of the ink is further improved.

The mass ratio of the content of the oxidant to the total amount of the ink is preferably in a range of 0.001% by mass to 1% by mass and more preferably in a range of 0.01% by mass to 0.1% by mass.

In a case where the content of the oxidant is 0.001% by mass or greater with respect to the total amount of the ink, etching of the ink flow passage wall is further suppressed.

In a case where the content of the oxidant is 1% by mass or less with respect to the total amount of the ink,

the stability of the ink is further improved.

<Colloidal silica>

It is preferable that the ink of the present disclosure contain at least one kind of colloidal silica.

In this manner, etching of the ink flow passage wall is further suppressed.

The colloidal silica is a colloid consisting of fine particles of an inorganic oxide that contains silicon.

The colloidal silica may contain silicon dioxide (including a hydrate thereof) as a main component and an aluminate as a minor component.

Examples of the aluminate that may be contained as a minor component include sodium aluminate and potassium aluminate.

Further, the colloidal silica may contain inorganic salts such as sodium hydroxide, potassium hydroxide, lithium hydroxide, and ammonium hydroxide, and organic salts such as tetramethylammonium hydroxide. These inorganic salts and organic salts function as, for example, a stabilizer for a colloid.

A dispersion medium in the colloidal silica is not particularly limited, and may be any of water, an organic solvent, or a mixture thereof.

The organic solvent may be a water-soluble organic solvent or a water-insoluble organic solvent, but a water-soluble organic solvent is preferable as the organic solvent.

Specific examples of the water-soluble organic solvent include methanol, ethanol, isopropyl alcohol, and n-propanol.

A method of producing colloidal silica is not particularly limited, and the colloidal silica can be produced by a method that has been commonly used. For example, colloidal silica can be produced from water glass or aerosil synthesis performed by thermal decomposition of silicon tetrachloride. Alternatively, colloidal silica can also be produced by a liquid phase synthesis method such as hydrolysis of an alkoxide (see, for example, "Fiber and Industry", Vol. 60, No. 7 (2004), p. 376) or the like.

The volume average particle diameter of the colloidal silica is not limited as long as the particle diameter ratio [colloidal silica/titanium dioxide particles] is 0.04 or less.

From the viewpoint of more effectively obtaining the effect of suppressing abrasion deterioration of the ink jet head, the volume average particle diameter of the colloidal silica is preferably 200 nm or less, more preferably 100 nm or less, still more preferably 50 nm or less, even still more preferably 25 nm or less, and even still more preferably 20 nm or less.

The lower limit of the volume average particle diameter of the colloidal silica may be 1 nm, 3 nm, or the like.

The volume average particle diameter of colloidal silica is determined by a dynamic light scattering method.

As a measuring device for the volume average particle diameter using the dynamic light scattering method, for example, NANOTRAC UPA (manufactured by MicrotracBEL Corp.) is used.

The shape of the colloidal silica is not particularly limited as long as the jetting performance of the ink is not disturbed. For example, the colloidal silica may have a spherical shape, a long shape, a needle shape, or a bead shape. Among these, from the viewpoint of the jettability of the ink, it is preferable that the colloidal silica has a spherical shape.

As the colloidal silica, produced colloidal silica or a commercially available product may be used.

Specific examples of the commercially available product include Ludox AM, Ludox AS, Ludox LS, Ludox TM, Ludox HS, and the like (all manufactured by E.I. Du Pont de Nemours & Company); SNOWTEX S, SNOWTEX XS, SNOWTEX 20, SNOWTEX 30, SNOWTEX 40, SNOWTEX N, SNOWTEX C, SNOWTEX O, and the like (all manufactured by Nissan Chemical Corporation); Syton C-30, SytonZOO, and the like (all manufactured by Monsanto Company); Nalcoag-1060 and Nalcoag-ID21 to 64 (all manufactured by Nalco Chemical Company); METHANOL SOL, IPA SOL, MEK SOL, and TOLUENE SOL (all manufactured by Fuso Chemical Co., Ltd.); Cataloid-S, Cataloid-F120, Cataloid SI-350, Cataloid SI-500, Cataloid SI-30, Cataloid S-20L, Cataloid S-20H, Cataloid S-30L, Cataloid S-30H, Cataloid SI-40, OSCAL-1432 (Isopropyl alcohol sol), and the like (all manufactured by JGC Catalyst and Chemicals Ltd.); and ADELITE (manufactured by Adeka Corporation).

Further, examples of the colloidal silica having a bead shape include commercially available products such as SNOWTEX ST-UP, SNOWTEX PS-S, SNOWTEX PS-M, SNOWTEX ST-OUP, SNOWTEX PS-SO, and SNOWTEX PS-MO (all trade names, manufactured by Nissan Chemical Corporation).

From the viewpoint of further suppressing the ink flow passage wall from being etched, the content of the solid content of the colloidal silica is preferably in a range of 0.01% by mass to 5% by mass, more preferably in a range of 0.01% by mass to 2% by mass, and still more preferably in a range of 0.01% by mass to 1% by mass with respect to the total amount of the ink.

<Organic solvent>

From the viewpoint of the j ettability of the ink, it is preferable that the ink of the present disclosure contain an organic solvent.

From the viewpoint of the jettability of the ink, the content of the organic solvent is preferably 2.5% by mass or greater with respect to the total amount of the ink.

The upper limit of the content of the organic solvent is not particularly limited, but is preferably 30% by mass from the viewpoint of ink drying properties.

An organic solvent having a Clog P value of 1.0 to 3.5 is preferable as the organic solvent.

In a case where the organic solvent has a Clog P value of 1.0 or greater, the hydrophobicity is not extremely low, which is preferable from the viewpoint of suppressing landing interference of the ink and improving the graininess of the image.

Further, in a case where the organic solvent has a Clog P value of 3.5 or less, the hydrophobicity is not extremely high, and thus the jettability is excellent.

As the organic solvent, at least one selected from the group consisting of a compound represented by Formula 1 and a compound represented by Formula 2 is preferable, and an organic solvent which is at least one of the above-described compounds and has a Clog P value of 1.0 to 3.5 is more preferable.

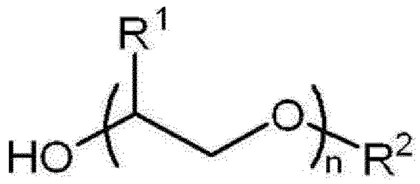 (1) 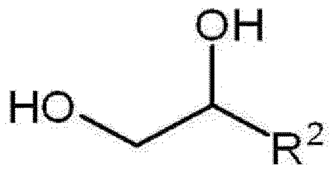 (2)

In Formula 1 or 2, $R^1$'s each independently represent a hydrogen atom or a methyl group, $R^2$'s each independently represent a linear or branched hydrocarbon group having 4 to 9 carbon atoms, or an aryl group having 6 to 10 carbon atoms, and n represents an integer of 1 to 3.

In Formula 1, it is preferable that $R^1$ represents a hydrogen atom from the viewpoint of decreasing the surface tension of the ink.

In Formula 1, it is preferable that n represents 1 or 2 from the viewpoint of decreasing the surface tension of the ink.

In Formulae 1 and 2, examples of the linear or branched hydrocarbon group having 4 to 9 carbon atoms as $R^2$ include an n-butyl group, a t-butyl group, an n-pentyl group, an n-hexyl group, and a 2-ethylhexyl group.

In Formulae 1 and 2, examples of the aryl group having 6 to 10 carbon atoms as $R^2$ include a phenyl group, a p-toluyl group, an m-toluyl group, a 2,6-dimethylphenyl group, a 4-t-butylphenyl group, a 4-methoxyphenyl group, a 4-butoxyphenyl group, a 2-chlorophenyl group, and a naphthyl group.

Examples of the organic solvent which is represented by Formula 1 or 2 and has a Clog P value of 1.0 to 3.5 include ethylene glycol monoalkyl ether such as ethylene glycol monopentyl ether, ethylene glycol monohexyl ether, ethylene glycol monoheptyl ether, ethylene glycol monooctyl ether, ethylene glycol monononyl ether, or ethylene glycol mono-2-ethylhexyl ether, diethylene glycol monoalkyl ether such as diethylene glycol monopentyl ether, diethylene glycol monohexyl ether, diethylene glycol monoheptyl ether, diethylene glycol monooctyl ether, diethylene glycol monononyl ether, or diethylene glycol mono-2-ethylhexyl ether, triethylene glycol monoalkyl ether such as triethylene glycol monopentyl ether, triethylene glycol monohexyl ether, triethylene glycol monoheptyl ether, triethylene glycol monooctyl ether, triethylene glycol monononyl ether, or triethylene glycol mono-2-ethylhexyl ether, propylene glycol monoalkyl ether such as propylene glycol monobutyl ether, propylene glycol monopentyl ether, propylene glycol monohexyl ether, propylene glycol monoheptyl ether, propylene glycol monooctyl ether, or propylene glycol mono-2-ethylhexyl ether, dipropylene glycol monoalkyl ether such as dipropylene glycol monobutyl ether, dipropylene glycol monopentyl ether, dipropylene glycol monohexyl ether, dipropylene glycol monoheptyl ether, dipropylene glycol monooctyl ether, or dipropylene glycol mono-2-ethylhexyl ether, tripropylene glycol monoalkyl ether such as tripropylene glycol monobutyl ether, tripropylene glycol monopentyl ether, tripropylene glycol monohexyl ether, tripropylene glycol monoheptyl ether, tripropylene glycol monooctyl ether, or tripropylene glycol mono-2-ethylhexyl ether, and alkanediol such as 1,2-heptanediol, 1,2-octanediol, 1,2-nonanediol, or 1,2-decanediol.

Among these, as the organic solvent that can be contained in the ink, ethylene glycol monoalkyl ether, diethylene glycol monoalkyl ether, or an alkanediol is preferable, and ethylene glycol monohexyl ether, diethylene glycol monohexyl ether (hexyl diglycol), diethylene glycol mono-2-ethylhexyl ether, or 1,2-octanediol is more preferable.

Further, examples of the organic solvent that can be contained in the ink of the present disclosure also include the solvents described in paragraphs 0142 to 0154 of JP2015-180710A.

<Dispersing agent>

The ink of the present disclosure may contain at least one dispersing agent.

In the present disclosure, the dispersing agent has a function of dispersing the pigment. The pigment is more easily dispersed in a dispersion medium (for example, water or a mixture of water and an organic solvent) by allowing the dispersing agent to be adsorbed on the surface of the pigment so that at least a part of the surface of the pigment is coated with the dispersing agent.

From the viewpoint of improving the jettability of the ink, it is preferable that the dispersing agent is crosslinked.

The dispersing agent is considered to be present in the ink in a state where a part of the dispersing agent is adsorbed on the surface of the pigment and a part thereof is desorbed from the surface of the pigment.

In a case where the dispersing agent is crosslinked, the dispersing agent is unlikely to be desorbed from the surface of the pigment, and thus the jettability of the ink is considered to be improved.

It is possible to determine whether the dispersing agent is crosslinked using, for example, the following method.

The structure of the dispersing agent and the content ratio of monomers constituting the dispersing agent are specified by centrifuging the ink at a rotation speed of 10000 rpm for 30 minutes, extracting the precipitated pigment dispersion with an organic solvent having a high polarity, and analyzing components using spectroscopy or a nuclear magnetic resonance (NMR) method. The organic solvent having a high polarity which is used here is appropriately selected according to the kind of polymer for the purpose of extraction.

From the viewpoint of the dispersion stability of the ink, it is preferable that the dispersing agent is a polymer.

The structure of the dispersing agent is not particularly limited and may be any of a random polymer, a block polymer, or a graft polymer.

A crosslinked polymer (hereinafter, also referred to as "crosslinked polymer") is more preferable as the dispersing agent.

The crosslinked polymer is formed, for example, by crosslinking an uncrosslinked polymer with a crosslinking agent.

In this case, it is preferable that a crosslinked polymer is formed (that is, a pigment dispersion containing a crosslinked polymer and a pigment is obtained) by firstly preparing a pigment dispersion containing an uncrosslinked polymer and a pigment and crosslinking the uncrosslinked polymer in the uncrosslinked pigment dispersion using a crosslinking agent.

It is preferable that the uncrosslinked polymer is a water-soluble polymer.

In the present disclosure, the term "water-soluble" in "water-soluble polymer" denotes a property that 2% by mass or greater of a substance is dissolved in distilled water at 25°C. The amount of the water-soluble resin to be dissolved in distilled water at 25°C is preferably 5% by mass or greater and more preferably 10% by mass or greater.

Examples of the uncrosslinked polymer include polyvinyl, polyurethane, and polyester. Among these, polyvinyl is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group.

It is preferable that the polymer containing a carboxy group is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

It is preferable that the copolymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include a (meth)acrylate containing an alkyl group with 1 to 20 carbon atoms and a (meth)acrylate having an aromatic ring.

The polymer containing a carboxy group is preferably a copolymer having a structural unit derived from a carboxy group-containing monomer and at least one selected from the group consisting of a structural unit derived from a (meth)acrylate containing an alkyl group with 1 to 20 carbon atoms and a structural unit derived from a (meth)acrylate having an aromatic ring, more preferably a copolymer having a structural unit derived from (meth)acrylic acid and a structural unit derived from a (meth)acrylate having an aromatic ring, and particularly preferably a copolymer having a

structural unit derived from (meth)acrylic acid and a structural unit derived from benzyl (meth)acrylate.

From the viewpoint of the dispersibility of the pigment, the acid value of the uncrosslinked polymer is preferably in a range of 67 mgKOH/g to 200 mgKOH/g and more preferably in a range of 67 mgKOH/g to 150 mgKOH/g.

Further, from the viewpoint of the dispersibility of the pigment, the acid value of the crosslinked polymer is preferably in a range of 55 mgKOH/g to 100 mgKOH/g.

The weight-average molecular weight (Mw) of the uncrosslinked polymer is not particularly limited, but is preferably in a range of 3000 to 100000, more preferably in a range of 5000 to 80000, and still more preferably in a range of 10000 to 60000 from the viewpoint of the dispersibility of the pigment.

The preferable ranges of the weight-average molecular weight of the crosslinked polymer are the same as the preferable ranges of the weight-average molecular weight of the uncrosslinked polymer.

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bi- or higher functional epoxy compound) and a polymer containing a carboxy group is preferable. In this combination, a crosslinking structure is formed by the reaction between the epoxy group and the carboxy group. In this manner, a crosslinked polymer is formed. It is preferable that the crosslinking structure is formed by the crosslinking agent after the pigment is dispersed by the uncrosslinked polymer.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1: 1.1 to 1:10, more preferably in a range of 1:1.1 to 1:5, and still more preferably in a range of 1: 1.1 to 1:3.

The mixing ratio between the pigment and the dispersing agent is preferably in a range of 1:0.06 to 1:3, more preferably in a range of 1:0.125 to 1:2, and still more preferably in a range of 1:0.125 to 1:1.5 in terms of the mass.

<Silicone-based surfactant>

The ink according to the present disclosure contains at least one silicone-based surfactant.

It is preferable that the silicone-based surfactant is a compound having a polysiloxane structure in a molecule. In a case where the ink contains the silicone-based surfactant, the jettability of the ink is improved. The reason for this is considered to be that the ink is unlikely to adhere to a nozzle from which the ink is jetted in a case where the ink contains the silicone-based surfactant.

Examples of the silicone-based surfactant include a compound in which an organic group is introduced to a part of dimethylpolysiloxane.

An organic group is introduced to a side chain, one terminal, both terminals, or both a side chain and a terminal of dimethylpolysiloxane.

Examples of the dimethylpolysiloxane to which an organic group is introduced include modified silicone compounds such as amine-modified silicone, alcohol-modified silicone, polyether-modified silicone, and long-chain alkyl-modified silicone.

Among these, from the viewpoint of improving the j ettability of the ink, it is preferable that the silicone-based surfactant is a polyether-modified silicone.

It is preferable that the silicone-based surfactant is a compound having a molecular weight of 200 to 2000 and having a structure represented by Formula 4.

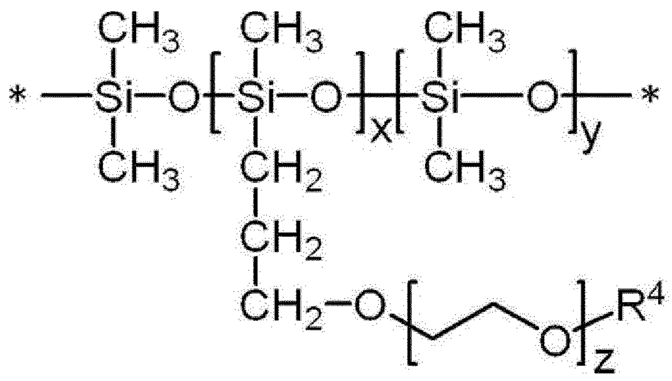

(4)

In Formula 4, $R^4$ represents a hydrogen atom or an alkyl group having 1 to 4 carbon atoms, and x, y, and z each independently represent an integer of 1 or greater. "*" represents a bonding position with respect to another structure in a molecule.

In Formula 4, it is preferable that $R^4$ represents a hydrogen atom or a methyl group.

The molecular weight of the silicone-based surfactant is in a range of 200 to 2000 and preferably in a range of 400 to 1800. Since the silicone-based surfactant having a molecular weight of 200 to 2000 is likely to be aligned at the interface, the jettability is improved.

The content of the silicone-based surfactant is preferably in a range of 0.03% by mass to 0.8% by mass, more preferably in a range of 0.04% by mass to 0.5% by mass, and still more preferably in a range of 0.05% by mass to 0.3% by mass with respect to the total mass of the ink.

<Acetylene glycol-based surfactant>

The ink of the present disclosure may contain at least one acetylene glycol-based surfactant.

Examples of the acetylene glycol-based surfactant include an acetylene glycol-based surfactant represented by Formula 6.

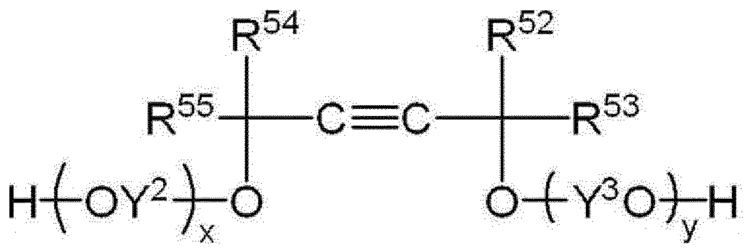

(6)

In Formula 6, $R^{52}$, $R^{53}$, $R^{54}$, and $R^{55}$ each independently represent a hydrogen atom or a linear, branched, or cyclic alkyl group having 1 to 8 carbon atoms. $Y^2$ and $Y^3$ each independently represent an alkylene group having 2 to 6 carbon atoms. x and y represent the average number of added moles and satisfy an expression of $1 \leq x + y \leq 85$.

Examples of the linear, branched, or cyclic alkyl group having 1 to 8 carbon atoms as $R^{52}$ and $R^{54}$ include a methyl group, an ethyl group, an n-propyl group, an isopropyl group, an n-butyl group, an isobutyl group, a 2-butyl group, a t-butyl group, a hexyl group, a cyclohexyl group, and an octyl group. In a case where $R^{52}$ and $R^{54}$ represent a cyclic alkyl group, the number of carbon atoms of the alkyl group is preferably in a range of 3 to 8. $R^{52}$ and $R^{54}$ represent preferably an alkyl group having 1 to 3 carbon atoms and most preferably a methyl group.

Examples of the linear, branched, or cyclic alkyl group having 1 to 8 carbon atoms as $R^{53}$ and $R^{55}$ include a methyl group, an ethyl group, an n-propyl group, an isopropyl group, an n-butyl group, an isobutyl group, a 2-butyl group, a t-butyl group, a hexyl group, a cyclohexyl group, and an octyl group. In a case where $R^{53}$ and $R^{55}$ represent a cyclic alkyl group, the number of carbon atoms of the alkyl group is preferably in a range of 3 to 8. $R^{53}$ and $R^{55}$ represent preferably a linear, branched, or cyclic alkyl group having 3 to 8 carbon atoms and particularly preferably an isobutyl group.

The sum of x and y is in a range of 1 to 85 ($1 \leq x + y \leq 85$), preferably in a range of 3 to 50, more preferably in a range of 3 to 30, and still more preferably in a range of 5 to 30. In a case where the sum of x and y is 3 or greater, the solubility is further improved and the clouding point is further increased. In this manner, separation, precipitation, and the like in a case where the moisturizing liquid is heated to 30°C or higher are further suppressed. Further, in a case where the sum of x and y is 30 or less, the effects of decreasing the surface tension and improving the wettability are more effectively exhibited. In this manner, the jettability of the ink to be jetted is further enhanced in a case where filling

of the ink is carried out after the filling of the moisturizing liquid and the ink is jetted.

$Y^2$ and $Y^3$ each independently represent preferably an alkylene group having 2 to 4 carbon atoms, more preferably an alkylene group having 2 or 3 carbon atoms, and particularly preferably an alkylene group (ethylene group) having 2 carbon atoms. That is, among compounds represented by Formula 6, an acetylene glycol-based surfactant represented by Formula 7 is more preferable.

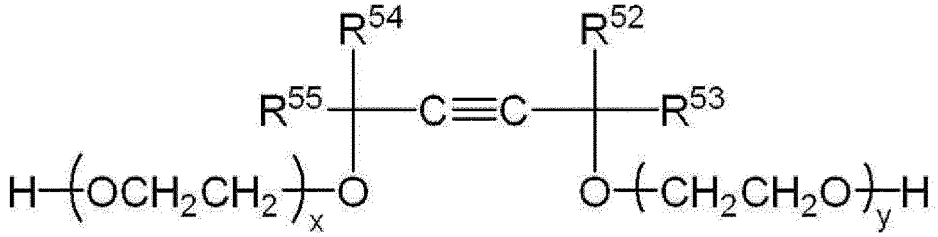

(7)

In Formula 7, $R^{52}$, $R^{53}$, $R^{54}$, $R^{55}$, x, and y each have the same definition as that for $R^{52}$, $R^{53}$, $R^{54}$, $R^{55}$, x, and y in Formula 6, and the preferable ranges thereof are the same as described above.

Examples of the acetylene glycol-based surfactant represented by Formula 6 include an alkylene oxide adduct (preferably an ethylene oxide adduct) such as 2,4,7,9-tetramethyl-5-decyne-4,7-diol, 3,6-dimethyl-4-octyne-3,6-diol, 2,5,8,11-tetramethyl-6-dodecyne-5,8-diol, or 2,5-dimethyl-3-hexyne-2,5-diol. In particular, it is preferable that the acetylene glycol-based surfactant represented by Formula 6 is an ethylene oxide adduct of 2,4,7,9-tetramethyl-5-decyne-4,7-diol ($3 \leq x + y \leq 30$, preferably $5 \leq x + y \leq 30$).

The acetylene glycol-based surfactant represented by Formula 6 may be a commercially available product on the market.

Examples of the commercially available product include SURFYNOL Series (such as SURFYNOL 420, SURFYNOL 440, SURFYNOL 465, and SURFYNOL 485) and OLFINE Series (such as OLFINE E1010 and OLFINE E1020) (manufactured by Air Products Ltd. or Nissin Chemical Co., Ltd.), DYNOL Series (such as DYNOL 604), and ACETYLENOL (manufactured by Kawaken Fine Chemicals Co., Ltd.). Further, commercially available products are also provided by Dow Chemical Company, General Aniline & Film Corporation, and the like.

The content of the acetylene glycol-based surfactant is preferably in a range of 0.03% by mass to 5% by mass, more preferably in a range of 0.04% by mass to 4% by mass, and still more preferably in a range of 0.05% by mass to 3% by mass with respect to the total amount of the ink.

<Cellulose nanofibers>

It is preferable that the ink of the present disclosure contains at least one kind of cellulose nanofibers.

In a case where the ink of the present disclosure contains cellulose nanofibers, the viscosity of the ink can be effectively increased. In this manner, the jettability of the ink can be expected to be improved.

The cellulose nanofibers are nanocellulose extracted from a cellulose raw material (for example, wood).

Examples of a method of extracting the cellulose nanofibers include mechanical treatments (such as a pulverization treatment using a beads mill) and chemical treatments (such as a TEMPO catalytic oxidation treatment, a carboxymethylation treatment, and a cationization treatment).

From the viewpoint of further improving filter suitability of the ink (that is, a property of suppressing clogging of a filter in a case where the ink passes through the filter, the same applies hereinafter), it is preferable that the cellulose nanofibers which can be contained in the ink of the present disclosure contain TEMPO-oxidized cellulose nanofibers (that is, nanocellulose extracted by the TEMPO catalytic oxidation treatment).

Here, TEMPO means a 2,2,6,6-tetramethylpiperidine 1-oxyl free radical.

As the cellulose nanofibers, commercially available products may be used.

Examples of the commercially available products of the cellulose nanofibers include "RHEOCRYSTA" (registered trademark, manufactured by DKS Co., Ltd.), "CELLENPIA" (registered trademark, manufactured by Nippon Paper Industries Co., Ltd.), IMa-10002, BMa-10002, WMa-10002, AMa-10002, and FMa-10002 (all manufactured by SUGINO MACHINE LIMITED), "ELEX" (manufactured by Daio Paper Corporation), and "AUROVISCO" (registered trademark, manufactured by Oji Paper Co., Ltd.).

The average fiber width of the cellulose nanofibers is preferably 1 nm or greater and 20 nm or less and more preferably 1 nm or greater and 10 nm or less. In a case where the average fiber width of the cellulose nanofibers is 20 nm or less, the filter suitability of the ink is further improved.

In the present disclosure, the average fiber width of the cellulose nanofibers is determined by measuring fiber widths of 10 cellulose nanofibers by observation with a scanning electron microscope and arithmetically averaging the

measured values of the obtained fiber widths of 10 cellulose nanofibers.

The average fiber length of the cellulose nanofibers is preferably 10 nm or greater and 1000 nm or less, more preferably 100 nm or greater and 900 nm or less, still more preferably 100 nm or greater and 600 nm or less, and even still more preferably 200 nm or greater and 400 nm or less. In a case where the average fiber length of the cellulose nanofibers is 1000 nm or less, the filter suitability of the ink is further improved.

In the present disclosure, the average fiber length of the cellulose nanofibers is determined by measuring fiber lengths of 10 cellulose nanofibers by observation with a scanning electron microscope and arithmetically averaging the measured values of the obtained fiber lengths of 10 cellulose nanofibers.

From the viewpoint of further improving the effect of increasing the viscosity of the ink and the filter suitability of the ink, the average aspect ratio of the cellulose nanofibers is preferably 100 or greater and 400 or less and more preferably 100 or greater and 300 or less.

In the present disclosure, the average aspect ratio of the cellulose nanofibers is determined by measuring the aspect ratios (that is, ratios [fiber length/fiber width]) of 10 cellulose nanofibers by observation with a scanning electron microscope and arithmetically averaging the measured values of the aspect ratios of 10 cellulose nanofibers.

The mass ratio of the content of the cellulose nanofibers to the total content of the resin particles and the wax particles is preferably in a range of 1.00% by mass to 10.00% by mass, more preferably in a range of 2.00% by mass to 8.00% by mass, and still more preferably in a range of 3.00% by mass to 6.00% by mass.

In a case where the content of the cellulose nanofibers is 1.00% by mass or greater with respect to the total content of the resin particles and the wax particles, the viscosity of the ink can be more effectively increased.

In a case where the content of the cellulose nanofibers is 10.00% by mass with respect to the total content of the resin particles and the wax particles, the filter suitability of the ink can be further improved.

Further, the mass ratio of the content of the cellulose nanofibers to the total amount of the ink is preferably in a range of 0.01% by mass to 1.00% by mass, more preferably in a range of 0.03% by mass to 0.50% by mass, and still more preferably in a range of 0.05% by mass to 0.40% by mass.

In a case where the content of the cellulose nanofibers is 0.01% by mass or greater with respect to the total amount of the ink, the viscosity of the ink can be more effectively increased.

In a case where the content of the cellulose nanofibers is 1.00% by mass or less with respect to the total amount of the ink, the filter suitability of the ink can be further improved.

<Other components>

The ink of the present disclosure may contain other components in addition to the above-described components.

Examples of the other components include surfactants other than the silicone-based surfactant and the acetylene glycol-based surfactant.

Further, examples of other components further include a preservative, an ultraviolet absorbing agent, an antifading agent, a fungicide, a pH adjuster, a rust inhibitor, an antioxidant, an emulsion stabilizer, a preservative, an antifoaming agent (for example, the antifoaming agent described in paragraph 0159 of JP2015-180710A), a viscosity adjuster, a dispersion stabilizer, a chelating agent, a solid wetting agent (for example, urea), and a water-soluble polymer (for example, the water-soluble polymer described in paragraph 0139 of JP2015-180710A).

<Physical properties of ink>

(Dynamic surface tension)

It is preferable that the ink of the present disclosure has a dynamic surface tension of 35 mN/m or less at 10 milliseconds.

In this manner, the image quality of an image to be recorded using an ink is improved. The reason for this is considered to be that in a case where the dynamic surface tension at 10 milliseconds is 35 mN/m or less, the surface tension of the ink is reduced, the landing interference is suppressed, and the wet spreadability of the ink is improved.

The lower limit of the dynamic surface tension at 10 milliseconds is not particularly limited, but is preferably 15 mN/m from the viewpoint of the storage stability of the ink.

In the present disclosure, the dynamic surface tension at 10 milliseconds is measured by a maximum foaming pressure method in an environment of a temperature of 23 °C and a relative humidity of 55%.

The dynamic surface tension at 10 milliseconds is measured using, for example, a bubble pressure type dynamic surface tension meter (product name, "BP100", manufactured by KRUSS).

The dynamic surface tension at 10 milliseconds is a surface tension calculated from the maximum foam pressure in a case where the time from when bubbles are continuously jetted from the probe capillary tube inserted into the ink and a new interface is formed in the tip of the probe capillary tube (0 milliseconds) to when the maximum foam pressure

is obtained is 10 milliseconds.

The dynamic surface tension of the ink jetted from the nozzle starts to decrease from the moment of being jetted and continuously decreases even after the ink lands on the recording medium to finally converge to the value of the static surface tension of the ink. The rate of decrease in dynamic surface tension is greatest immediately after jetting and gradually decreases as the time elapses after the jetting. Therefore, in a case where a certain ink droplet A lands on the recording medium and an ink droplet B subsequently lands on the recording medium, the dynamic surface tension of the ink droplet A is decreased further than the dynamic surface tension of the ink droplet B at the time point at which the ink droplet B lands on the recording medium. In a case where the dynamic surface tensions of the two ink droplets are different from each other, landing interference is likely to occur between the ink droplet A landed first and the ink droplet B landing later. Specifically, the image density is uneven due to attraction of the ink droplet A having a relatively low dynamic surface tension to the ink droplet B having a relatively high dynamic surface tension. In a case where the image density is uneven, the image gives an impression of being rough. That is, the graininess of the image is degraded.

The dynamic surface tension at 10 milliseconds is a value closest to the dynamic surface tension at the moment of the ink droplets landing on the recording medium. In a case where the dynamic surface tension at 10 milliseconds is 35 mN/m or less, ink droplets spread on the recording medium, and thus landing interference can be suppressed. An image in which the image density is unlikely to be uneven and the graininess is more excellent can be obtained.

(Viscosity)

In the ink of the present disclosure, from the viewpoint of the jettability of the ink, the viscosity measured under conditions of 30°C and 100 revolutions per minute (rpm) is preferably in a range of 1.2 mPa s to 15.0 mPa s, more preferably 2.0 mPa s to 13.0 mPa s, still more preferably in a range of 2.5 mPa s to 10.0 mPa s, and even still more preferably in a range of 3.8 mPa s to 6.0 mPa s.

The viscosity is a value measured using a rotational viscometer.

As the rotational viscometer, for example, VISCOMETER TV-22 (manufactured by TOKI SANGYO CO., LTD.) is used.

[Image recording method]

An image recording method of the present disclosure includes a step of jetting the above-described ink of the present disclosure from an ink jet head having an ink flow passage wall containing silicon and applying the ink onto a recording medium (hereinafter, also referred to as "ink applying step").

The image recording method of the present disclosure uses the ink of the present disclosure and the above-described inkjet head. Therefore, according to the image recording method of the present disclosure, etching of the ink flow passage wall containing silicon in the ink jet head can be suppressed.

The image recording method of the present disclosure includes, as necessary, other steps such as a step of drying water and the organic solvent contained in the ink applied onto the recording medium (hereinafter, also referred to as "ink drying step") and a step of melting the resin particles contained in the ink and fixing the resin particles (hereinafter, also referred to as "heat-fixing step").

It is preferable that the image recording method of the present disclosure is a method of directly applying the ink of the present disclosure onto a recording medium to record an image. That is, it is preferable that the image recording method of the present disclosure is a so-called one-liquid system.

<Ink applying step>

In the ink applying step, the ink of the present disclosure is jetted from the ink jet head having an ink flow passage wall containing silicon and applied onto a recording medium. In this manner, an image is recorded with the ink of the present disclosure.

The recording medium is not particularly limited, and examples thereof include coated paper used for general offset printing and the like.

The coated paper is formed by coating a surface of high-quality paper, alkaline paper, or the like which mainly contains cellulose and has not been usually subjected to a surface treatment, with a coating material to provide a coating layer.

The coated paper is available as a commercially available product. Examples of the coated papers include "OK TOPCOAT+" (manufactured by Oji Paper Co., Ltd.), coated paper (A2 and B2) such as "AURORA COAT" and "ULITE" (manufactured by Nippon Paper Industries Co., Ltd.), and art paper (A1) such as "TOKUBISHI ART" (manufactured by Mitsubishi Paper Mills Ltd.).

The ink can be jetted and applied to the recording medium by a typical ink jet recording method.

Examples of the ink jet recording method include an electric charge control method of jetting an ink by using electrostatic attraction force, a drop-on-demand method (pressure pulse method) using a vibration pressure of a piezo element, an acoustic inkjet method of converting an electric signal into an acoustic beam, irradiating an ink with the acoustic beam, and jetting the ink by using a radiation pressure, and a thermal ink jet method of heating an ink to form bubbles and using the generated pressure.
The image recording method using an ink jet recording device is typically classified into a shuttle scan method (also referred to as "serial head method") in which an image is recorded using a short serial head and a single pass method (also referred to as "line head method") in which an image is recorded using a line head where recording elements are arranged in the entire recording medium in the width direction.
In the shuttle scan method, an image is recorded while the serial head is scanned in the width direction of the recording medium.
On the contrary, in the single pass method, an image can be recorded on the entire surface of the recording medium by scanning the recording medium in a direction orthogonal to the direction in which the recording elements are arranged. Therefore, the single pass method is different from the shuttle scan method in terms that a transport system such as a carriage that scans the serial head is not required. Further, in the single pass method, movement of the carriage and complicated scanning control between the carriage and the recording medium are unnecessary, and thus only the recording medium moves. Therefore, the recording speed can be increased as compared with the shuttle scan method.
From the viewpoint of ensuring the image quality, the liquid droplet amount of the ink to be jetted from an ink jet head is preferably in a range of 1 pL (picoliter) to 10 pL and more preferably in a range of 1.5 pL to 6 pL. Further, the liquid droplet amount denotes the volume of the ink to be jetted from one nozzle at one time using the inkjet recording method.
In a case where the inkjet head has a nozzle surface on which nozzles for jetting an ink are arranged, the inkjet head may include a moisturizing cap that covers the nozzle surface and forms a moisturizing space with the nozzle surface. A moisturizing liquid can be stored in the moisturizing cap to increase the humidity of the moisturizing space.
The moisturizing liquid may contain an acetylene glycol-based surfactant, water, and a preservative.

<Ink drying step>

The image recording method of the present disclosure may include an ink drying step as necessary.
The ink drying step is a step of drying water and the organic solvent contained in the ink applied onto the recording medium.
The heating means is not particularly limited as long as water and the organic solvent contained in the ink can be dried, and examples thereof include a heat drum, hot air, an infrared lamp, a hot oven, and a heat plate.
The heating temperature and heating time are appropriately adjusted according to the contents of water and the organic solvent contained in the ink.

<Heat-fixing step>

The image recording method of the present disclosure may include a heat-fixing step after the ink applying step as necessary.
The heat-fixing step is a step of melting and fixing the resin particles contained in the ink. The image is fixed on the recording medium by performing the heat-fixing step, and thus the rub resistance of the image can be improved. As the heat-fixing step, for example, the heat-fixing step described in paragraphs 0112 to 0120 of JP2010-221415A can be employed.

<Treatment liquid adding step>

The image recording method of the present disclosure may include a treatment liquid applying step of applying a treatment liquid containing water and an aggregating agent to the surface of the recording medium to which the ink has been applied, before the ink applying step. In this case, in the ink applying step, the ink of the present disclosure is applied onto a region of the recording medium, to which the treatment liquid has been applied.
In this manner, the components in the ink can be aggregated by the aggregating agent in the treatment liquid applied in advance, which is advantageous in terms of the image quality (for example, definition) of the image to be obtained.

(Treatment liquid)

In regard to the treatment liquid, the description in paragraphs 0176 to 0198 of JP2015-180710A can be appropriately referred to.
From the viewpoint of the aggregation rate of the ink, the pH of the treatment liquid at 25°C is preferably in a range of 0.1 to 4.0 and more preferably in a range of 0.2 to 2.0.

The treatment liquid contains water.

The content of water is preferably 50% by mass or greater and more preferably 60% by mass or greater with respect to the total amount of the treatment liquid.
The upper limit of the content of the water with respect to the total amount of the treatment liquid depends on the amount of other components such as an aggregating agent, but is, for example, 90% by mass or 80% by mass.

The treatment liquid includes an aggregating agent.

It is preferable that the treatment liquid contains at least one acidic compound as the aggregating agent.
As the acidic compound serving as an aggregating agent, any of an organic acidic compound or an inorganic acidic compound may be used or two or more kinds of the organic acidic compound and the inorganic acidic compound may be used in combination.
Examples of the organic acidic compound include an organic compound containing an acidic group.
Examples of the acidic group include a phosphoric acid group, a phosphonic acid group, a phosphinic acid group, a sulfuric acid group, a sulfonic acid group, a sulfinic acid group, and a carboxy group. Among these, a phosphoric acid group or a carboxy group is preferable, and a carboxy group is more preferable.
As an organic acidic compound containing a carboxygroup (organic carboxylic acid), polyacrylic acid, acetic acid, glycolic acid, malonic acid, malic acid (preferably DL-malic acid), maleic acid, ascorbic acid, succinic acid, glutaric acid, fumaric acid, citric acid, tartaric acid, phthalic acid, 4-methylphthalic acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumarinic acid, thiophenecarboxylic acid, nicotinic acid, or derivatives of these compounds or salts thereof (for example, polyvalent metal salts), and the like are preferable. These compounds may be used alone or in combination of two or more kinds thereof.
As the organic carboxylic acid, a di- or higher valent carboxylic acid (hereinafter, also referred to as polyvalent carboxylic acid) is preferable, at least one selected from the group consisting of malonic acid, malic acid, maleic acid, succinic acid, glutaric acid, fumaric acid, tartaric acid, 4-methylphthalic acid, and citric acid is more preferable, and at least one selected from the group consisting of malonic acid, malic acid, tartaric acid, and citric acid is still more preferable.
Examples of the inorganic acidic compound include phosphoric acid, nitric acid, nitrous acid, sulfuric acid, and hydrochloric acid. Among these, phosphoric acid is particularly preferable.
The total amount of the acidic compound contained in the treatment liquid is not particularly limited, but is preferably in a range of 5% by mass to 40% by mass and more preferably in a range of 10% by mass to 30% by mass from the viewpoint of the aggregation rate of the ink.
In the content ratio between the organic acidic compound and the inorganic acidic compound, the content of the inorganic acidic compound to the content of the organic acidic compound is preferably in a range of 5% by mole to 50% by mole, more preferably in a range of 10% by mole to 40% by mole, and still more preferably in a range of 15% by mole to 35% by mole.
In the treatment liquid, other aggregation components such as polyvalent metal salts and cationic polymers may be used in combination instead of or in addition to the acidic compound, as the aggregating agent.
As the polyvalent metal salts or the cationic polymers, for example, the polyvalent metal salts or the cationic polymers described in paragraphs 0155 and 0156 of JP2011-042150A can be used.

- Water-soluble polymer compound -

It is preferable that the treatment liquid contains at least one water-soluble polymer compound.
The water-soluble polymer compound is not particularly limited, and known water-soluble polymer compounds such as polyvinyl alcohol, polyacrylamide, polyvinylpyrrolidone, and polyethylene glycol can be used.
Further, specific polymer compounds described below and water-soluble polymer compounds described in paragraphs 0026 to 0080 of JP2013-001854A are also suitable as the water-soluble polymer compound.
The weight-average molecular weight of the water-soluble polymer compound is not particularly limited, and can be set to be, for example, in a range of 10000 to 100000 and is preferably in a range of 20000 to 80000 and more

preferably in a range of 30000 to 80000.

Further, the content of the water-soluble polymer compound in the treatment liquid of the present invention is not particularly limited, but is preferably in a range of 0.1% by mass to 10% by mass, more preferably in a range of 0.1% by mass to 4% by mass, still more preferably in a range of 0.1% by mass to 2% by mass, and particularly preferably in a range of 0.1% by mass to 1% by mass with respect to the total amount of the treatment liquid.

In a case where the content of the water-soluble polymer compound is 0.1% by mass or greater, the spreading of ink droplets can be further promoted. Further, in a case where the content thereof is 10% by mass or less, the thickening of the treatment liquid can be further suppressed. Further, in a case where the content thereof is 10% by mass or less, coating unevenness of the treatment liquid caused by bubbles in the treatment liquid can be further suppressed.

A polymer compound (hereinafter, also referred to as a "specific polymer compound") which has a hydrophilic structural unit containing an ionic group (preferably an anionic group) is preferable as the water-soluble polymer compound. In this manner, the spreading of ink droplets applied to the recording medium can be further promoted so that image roughness is further suppressed.

Examples of the ionic group contained in the specific polymer compound include a carboxy group, a sulfonic acid group a phosphoric acid group, a boronic acid group, an amino group, an ammonium group, and salts thereof. Among these, a carboxy group, a sulfonic acid group, a phosphoric acid group, and salts thereof are preferable, a carboxy group, a sulfonic acid group, and salts thereof are more preferable, and a sulfonic acid group and a salt thereof are still more preferable.

As a hydrophilic structural unit containing an ionic group (preferably an anionic group), a structural unit derived from a (meth)acrylamide compound having an ionic group (preferably an anionic group) is preferable.

The content of the hydrophilic structural unit containing an ionic group (preferably an anionic group) in the water-soluble polymer compound can be set to be, for example, in a range of 10% by mass to 100% by mass and is preferably in a range of 10% by mass to 90% by mass, more preferably in a range of 10% by mass to 70% by mass, still more preferably in a range of 10% by mass to 50% by mass, and particularly preferably in a range of 20% by mass to 40% by mass with respect to the total mass of the water-soluble polymer compound.

It is more preferable that the specific polymer compound has at least one hydrophobic structural unit in addition to at least one hydrophilic structural unit containing the above-described ionic group (preferably an anionic group and particularly preferably a sulfonic acid group). Since the specific polymer compound is more likely to be present on the surface of the treatment liquid in a case where the specific polymer compound has a hydrophobic structural unit, the spreading of ink droplets applied to the recording medium is further promoted so that the image roughness is further suppressed.

As the hydrophobic structural unit, a structural unit derived from (meth)acrylic acid ester (preferably an alkyl ester in which the number of carbon atoms in (meth)acrylic acid is in a range of 1 to 4) is preferable.

The content of the hydrophobic structural unit in the specific polymer compound is, for example, in a range of 10% by mass to 90% by mass, preferably in a range of 30% by mass to 90% by mass, more preferably in a range of 50% by mass to 90% by mass, and still more preferably in a range of 60% by mass to 80% by mass with respect to the total mass of the specific polymer compound.

-Water-Soluble Organic Solvent-

It is preferable that the treatment liquid contains at least one water-soluble organic solvent.

The water-soluble organic solvent is not particularly limited as long as 5 g or greater of the organic solvent is dissolved in 100 g of water at 20°C. Specifically, the water-soluble organic solvent that can be contained in the ink composition described below can be similarly used in the treatment liquid. Among examples, from the viewpoint of suppressing curling, polyalkylene glycol or a derivative thereof is preferable, and at least one selected from diethylene glycol monoalkyl ether, triethylene glycol monoalkyl ether, dipropylene glycol, tripropylene glycol monoalkyl ether, polyoxypropylene glyceryl ether, or polyoxyethylene polyoxypropylene glycol is more preferable.

From the viewpoint of the coating properties, the content of the water-soluble organic solvent in the treatment liquid is preferably in a range of 3% by mass to 20% by mass and more preferably in a range of 5% by mass to 15% by mass with respect to the total amount of the treatment liquid.

- Surfactant -

The treatment liquid may contain at least one kind of surfactant. The surfactant can be used as a surface tension adjuster. Examples of the surface tension adjuster include a nonionic surfactant, a cationic surfactant, an anionic surfactant, and a betaine surfactant. Among these, from the viewpoint of the aggregation rate of the ink composition, a nonionic surfactant or an anionic surfactant is preferable.

Examples of the surfactant include compounds exemplified as surfactants in pp. 37 and 38 of JP1984-157636A

(JP-S59-157636A) and Research Disclosure No. 308119 (1989). Further, other examples of the surfactant include fluorine-based (fluorinated alkyl-based) surfactants and silicone-based surfactants described in JP2003-322926A, JP2004-325707A, and JP2004-309806A.

The treatment liquid may contain other components.

As the other components that can be contained in the treatment liquid, the above-described other components in the ink can be appropriately referred to.

## Examples

Hereinafter, examples of the present disclosure will be described below, but the present disclosure is not limited to the following examples.

Hereinafter, "part" is on a mass basis.

In Tables 1 to 4, "weight proportion (%)" is in units of "% by mass".

In the examples, the volume average particle diameter was measured by a particle size distribution measuring device (product name, "MICROTRAC UPA (registered trademark) EX150", manufactured by NIKKISO CO., LTD.).

The weight-average molecular weight was measured using HLC (registered trademark)-8020GPC (manufactured by Tosoh Corporation) as a measuring device, three columns of TSKgel (registered trademark), Super Multipore, HZ-H (manufactured by Tosoh Corporation, 4.6 mmID × 15 cm), and tetrahydrofuran (THF) as an eluent. Further, the measurement was performed under measurement conditions of a sample concentration of 0.45% by mass, a flow rate of 0.35 ml/min, a sample injection volume of 10 μL, and a measurement temperature of 40°C using an RI detector. Further, the calibration curve was prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The glass transition temperature was measured using a differential scanning calorimeter (product name, "EXSTAR 6220", manufactured by SII Nanotechnology Inc.).

The dynamic surface tension at 10 milliseconds was measured using, for example, a bubble pressure type dynamic surface tension meter (product name, "BP100", manufactured by KRUSS).

### [Preparation of resin particles]

#### <Preparation of resin particles C-29>

Resin particles C-29 among the specific examples of the resin particles described above were prepared as follows.

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant speed until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Subsequently, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 μm, thereby obtaining an aqueous dispersion liquid of resin particles C-29.

#### <Preparation of resin particles C-30, C-23, and C-24>

Each aqueous dispersion liquid was prepared using resin particles C-30, C-23, and C-24 among the specific examples of the resin particles described above by appropriately changing the kinds and the amounts of the monomers used in the preparation of the resin particles C-29.

<Resin particles D>

An aqueous dispersion liquid of resin particles D was obtained with reference to paragraphs 0240 and 0241 of JP2015-180710A.

The resin in the resin particles D is a copolymer of a methyl methacrylate unit/an isobornyl methacrylate unit/a methacrylic acid unit/a sodium methacrylate unit (= 70/20/5/5 [mass ratio]).

[Preparation of pigment dispersion liquid in which dispersing agent was crosslinked]

As a pigment dispersion liquid in which a dispersing agent was crosslinked (specifically, a crosslinked polymer), Projet Cyan APD1000 (manufactured by FUJIFELM Imaging Colorants Inc., cyan pigment dispersion liquid, pigment concentration in pigment dispersion liquid: 12% by mass) was prepared.

[Preparation of pigment dispersion liquid in which dispersing agent was not crosslinked]

As a pigment dispersion liquid in which a dispersing agent was not crosslinked, FUJI SP BLUE 6633 (manufactured by Fuji Pigment Co., Ltd., cyan pigment dispersion liquid, pigment concentration in pigment dispersion liquid: 17% by mass) was prepared.

[Examples 1 to 27 and Comparative Examples 1 to 4]

<Preparation of ink>

The active components of each ink listed in Tables 1 to 3 were mixed with water, and coarse particles were removed from the obtained mixed solution, thereby obtaining an ink.

The total amount of the active components in the inks listed in Tables 1 to 3 and the amount of water was 100 parts by mass.

The details of the following components in Tables 1 to 3 are as follows.

·SANNIX GP250: polyoxypropylated glycerin (manufactured by Sanyo Chemical Industries, Ltd.)
· PEG200: Polyethylene glycol 200 (manufactured by SANYO KASEI Co., Ltd.)
· PVP K-15: polyvinylpyrrolidone (manufactured by Ashland Inc.)
· SNOWTEX XS: colloidal silica (manufactured by Nissan Chemical Corporation)
· MOVINYI, 972: aqueous dispersion liquid of styrene/acrylic resin particles (manufactured by Japan Coating Resin Co., Ltd.)
· TRASOL CN: wax particles (manufactured by Chukyo Yushi Co., Ltd.)
· SELOSOL 524D: wax particles (manufactured by Chukyo Yushi Co., Ltd.)
· HITEC-E6314 ... wax particles (manufactured by Toho Chemical Industry Co., Ltd.)
· BYK-347: silicone-based surfactant (manufactured by BYK-Chemie Japan K.K.)
· BYK-024: silicone-based surfactant (manufactured by BYK-Chemie Japan K.K.)
· OLEFINE E1010: acetylene glycol-based surfactant (manufactured by Nissin Chemical Co., Ltd.)
· OLEFINE E1020: acetylene glycol-based surfactant (manufactured by Nissin Chemical Co., Ltd.)

<Measurement of ink>

The pH and the oxidation-reduction potential of each ink of the examples and the comparative examples were measured and respectively defined as pHi and ORPi.

The value on the left side of Inequality (X) was calculated using these values.

The results are listed in Tables 1 to 3.

In addition, the dynamic surface tension of each ink of the examples and the comparative examples at 10 milliseconds was measured.

The results are listed in Tables 1 to 3.

<Preparation of treatment liquid 1 and treatment liquid 2>

The components having the following composition were mixed to obtain a treatment liquid 1 and a treatment liquid 2.

- Composition of treatment liquid 1 -

- DEGmBE (diethylene glycol monobutyl ether): 6.0% by mass
- Malonic acid: 5.6% by mass
- Malic acid: 3.83% by mass
- Phosphoric acid in 85 mass% aqueous solution: 3.37% by mass
- Water-soluble polymer 1 shown below (in the water-soluble polymer 1 shown below, the number on the lower right side of each constitutional unit denotes the mass ratio (% by mass), and Mw denotes the weight-average molecular weight): 0.4% by mass
- Antifoaming agent (TSA-739 (15%), manufactured by Momentive Performance Materials Japan LLC, emulsion type silicone antifoaming agent): 0.0083% by mass as amount of silicone oil
- Benzotriazole: 1.0% by mass
- TAYCA POWER BN2070M (manufactured by Tayca Co., Ltd., surfactant): 0.42% by mass as amount of active component
- Ion exchange water: remaining amount set such that total amount of composition was 100% by mass

Water-soluble polymer 1

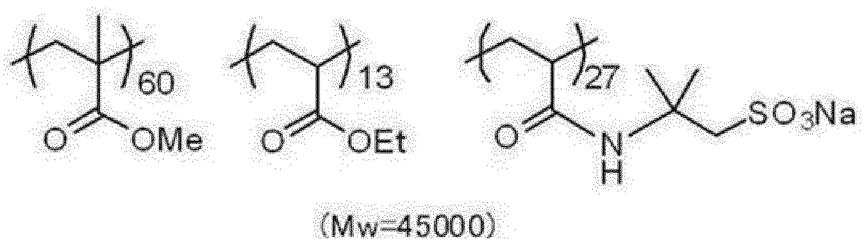

(Mw=45000)

- Composition of treatment liquid 2 -

- DEGmBE (diethylene glycol monobutyl ether): 7.2% by mass
- Malonic acid: 11.2% by mass
- Malic acid: 7.66% by mass
- Phosphoric acid in 85 mass% aqueous solution: 6.73% by mass
- Water-soluble polymer 1: 0.8% by mass
- Antifoaming agent (TSA-739 (15%), manufactured by Momentive Performance Materials Japan LLC, emulsion type silicone antifoaming agent): 0.01% by mass as amount of silicone oil
- Benzotriazole: 1.2% by mass
- TAYCA POWER BN2070M: 0.5% by mass as amount of active component
- Ion exchange water: remaining amount set such that total amount of composition was 100% by mass

<Image recording>

Image recording was performed using coated paper (trade name "OK TOPCOAT+", manufactured by Oji Paper Co., Ltd.) as a recording medium, the treatment liquid 1 as a treatment liquid, the ink of each example or each comparative example as an ink, and Jet Press 750S (manufactured by FUJIFILM Corporation) as an inkjet recording device.
The treatment liquid was applied to the surface of the recording medium, to which the ink was applied, as a preconditioner before the application of the ink.
The ink was applied to the surface of the recording medium to which the treatment liquid had been applied.
The resolution of the image formed by the ink was 1200 dpi × 1200 dpi, and the speed of image recording was 3600 sph.
Here, dpi is an abbreviation for dot per inch, and sph is an abbreviation for sheet per hour.

<Evaluation>

The property of suppressing the ink flow passage wall containing silicon from being etched was evaluated using the inks of the examples and the comparative examples.
The evaluation results are listed in Tables 1 to 3.
The evaluation method is as follows.

<Property of suppressing ink flow passage wall containing silicon from being etched>

An evaluation sample of the ink flow passage wall containing silicon in the inkjet head was prepared as follows.
A 1 cm × 1 cm chip of a silicon substrate (high-purity silicon wafer for research 6-P-25, model number: 2-960-59) was prepared. Kapton tape was attached to a part of the chip (that is, the silicon substrate), and a silicon exposed portion in contact with the ink and a masked portion to which the kapton tape was attached were prepared, thereby obtaining an evaluation sample.
The ink of each example and each comparative example was put into a container with a lid, and the evaluation sample was immersed in the ink. Here, a stirrer chip was placed in the container with a lid in advance, and the evaluation sample was immersed in the ink in a state where the ink had been stirred.
The container with a lid, in which the ink and the evaluation sample were placed, was placed in an evaluation furnace set at 60°C and allowed to stand for 8 days while the ink was stirred with a stirrer.
After the elapse of time, the evaluation sample was taken out from the container, washed, and dried, and the masking tape was taken off.
A level difference of the silicon exposed portion with respect to the masked portion (that is, a level difference generated by being etched) was measured using a level difference measuring device (SURFCORDER SE-500A, manufactured by Kosaka Laboratory Ltd.).
Based on the level difference, the property of suppressing the ink flow passage wall containing silicon from being etched was evaluated according to the following evaluation standards.
In the following evaluation standards, the property of suppressing the ink flow passage wall containing silicon from being etched is more excellent (that is, etching is suppressed) as the score is higher.

- Evaluation standards -

5: The level difference due to etching was not detected.
4.5: The level difference due to etching was detected, but was less than 0.2 μm.
4: The level difference due to etching was 0.2 μm or greater and less than 0.5 μm.
3.5: The level difference due to etching was 0.5 μm or greater and less than 1.0 μm.
3: The level difference due to etching was 1.0 μm or greater and less than 2.0 μm.
2: The level difference due to etching was 2.0 μm or greater and less than 3.0 μm.
1: The level difference due to etching was 3.0 μm or greater.

<Image density maintainability>

As an evaluation corresponding to the property of suppressing the ink flow passage wall from being etched, the image density maintainability was evaluated in the following manner. In a case where the etching of the ink flow passage wall progresses, jetting failure of the ink from the ink jet head is likely to occur, and the image density is likely to fluctuate (that is, the image density maintainability is likely to be degraded).
First, the ink was mounted on the ink jet recording device described in the operation of "image recording" above, and a solid image was recorded within 3 hours from the mounting. The density of the obtained solid image was measured using a densitometer (FD-5, manufactured by Konica Minolta, Inc.), and the obtained result was defined as "initial density".
Next, the ink was allowed to stand in a state of being mounted on the ink jet recording device for 3 days, a solid image was recorded in the same manner as described above, and the density of the solid image was measured. The obtained results were defined as "density after 3 days".
The ratio (%) of the density after 3 days to the initial density was determined as a density maintainability.
Based on the obtained rate of fluctuation in density, the image density maintainability was evaluated according to the following evaluation standards.
In the following evaluation standards, the rank at which the image density maintainability was most suppressed is A.

- Evaluation standards -

A: The density maintainability was 95% or greater.
B: The density maintainability was 70% or greater and less than 95%.
C: The density maintainability was less than 70%.

[Table 1]

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| | Pigment | Pigment dispersion in which dispersing agent is crosslinked (numerical value denotes amount of pigment) | Pro-Jet Cyan APD1000 | 3.0 | 3.0 | 3.0 | 3.0 | 3.0 | 3.0 | 3.0 | 3.0 | 3.0 | 3.0 |
| | | | Pro-Jet Black APD3000 | | | | | | | | | | |
| | | Pigment dispersion in which dispersing agent is not crosslinked (numerical value denotes amount of pigment) | FUJI SP BLUE 6633 | | | | | | | | | | |
| | | | FUJI SP MAGENTA 9488 | | | | | | | | | | |
| | Oxidant | | Hydrogen peroxide | 0.01 | | | 0.1 | 0.5 | 0.001 | | | | 0.01 |
| | | | Peracetic acid | | | | | | | 002 | | | |
| | | | Sodium percarbonate | | | | | | | | 0.03 | | |
| | | | Urea peroxide | | | | | | | | | 0.03 | |

(continued)

| | | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|---|
| Amount of active component in ink (parts by mass) | Organic solvent | Organic solvent represented by Formula 1 or Formula 2 | CLogP = 1.9 | Diethylene glycol monohexyl ether | 2.0 | 2.0 | 2.0 | 2.0 | 2.0 | 2.0 | 2.0 | 2.0 | 2.0 | 2.0 |
| | | | CLogP = 2.6 | Diethylene glycol mono-2-ethylhexyl ether | | | | | | | | | | |
| | | | CLogP = 0.53 | 1,2-Hexanediol | | | | | | | | | | |
| | | Other organic solvents | | Diethylene glycol isopropyl ether (CLog P = 0.08) | | | | | | | | | | |
| | | | | 1,2-Butanediol (CLog P = -0.53) | | | | | | | | | | |
| | | | | Propylene glycol | | | | | | | | | | |
| | | | | Tripropylene glycol monomethyl ether | | | | | | | | | | |
| | | | | SANNIX GP-250 | | | | | | | | | | |
| | | | | PEG-200 | | | | | | | | | | |
| | Adjuster | | | Urea | | | | | | | | | | |
| | | | | PVP K-15 | | | | | | | | | | |
| | | | | Tetrabutyl phosphonium hydroxide | | | | | | | | | | |
| | | | | Disodium bicinchoninate | | | | | | | | | | |
| | | | | Dimethylaminoethanol | | | | | | | | | | |
| | Colloidal silica | | | SNOWTEX XS | 0.1 | 0.1 | | 0.1 | 0.1 | 0.1 | 0.1 | 0.1 | 0.1 | |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| | Resin particles | Resin particles C-29 | 6.0 | 6.0 | 6.0 | 6.0 | 6.0 | 6.0 | 6.0 | 6.0 | 6.0 | 6.0 |
| | | Resin particles C-30 | | | | | | | | | | |
| | | Resin particles C-23 | | | | | | | | | | |
| | | Resin particles C-24 | | | | | | | | | | |
| | | Resin particles D | | | | | | | | | | |
| | | MOVINYL 972 | | | | | | | | | | |
| | Wax particles | TRASOL CN | 2.0 | 2.0 | 2.0 | 2.0 | 2.0 | 2.0 | 2.0 | 2.0 | 2.0 | 2.0 |
| | | SELOSOL 524D | | | | | | | | | | |
| | | HITEC E-6314 | | | | | | | | | | |
| | Silicone-based surfactant | BYK-347 | 0.1 | 0.1 | 0.1 | 0.1 | 0.1 | 0.1 | 0.1 | 0.1 | 0.1 | 0.1 |
| | | BYK-024 | | | | | | | | | | |
| | Fluorine-based surfactant | Capston FS-63 | | | | | | | | | | |
| | Acetylene glycol-based surfactant | OLFINE E1010 | | | | | | | | | | |
| | | OLFINE E1020 | | | | | | | | | | |
| | Total amount (parts by mass) | | 13.2 | 132 | 13.1 | 13.3 | 13.7 | 13.2 | 132 | 13.2 | 132 | 13.1 |
| | Weight proportion (%) of oxidant/(resin particles + wax) | | 0.13 | 0 | 0 | 1.25 | 6.25 | 0.01 | 0.28 | 0.38 | 0.35 | 0.13 |
| | pHi | | 8.8 | 8.8 | 8.8 | 8.5 | 8.3 | 8.8 | 8.8 | 8.8 | 8.8 | 8.8 |
| | ORPi (mV) | | 160 | 150 | 150 | 170 | 180 | 150 | 160 | 160 | 160 | 160 |
| | 285 - 59 × (pHi - 6.2) | | 132 | 132 | 132 | 149 | 161 | 132 | 132 | 132 | 132 | 132 |
| | ORPi - [285 - 59] × (pHi - 6.2)] | | 28 | 18 | 18 | 21 | 19 | 18 | 28 | 28 | 28 | 28 |
| | Dynamic surface tension at 10 milliseconds (mN/m) | | 36 | 36 | 36 | 36 | 36 | 36 | 36 | 36 | 36 | 36 |
| Evaluation | Property of suppressing ink flow passage wall containing silicon from being etched | | 5 | 3.5 | 3 | 5 | 5 | 3.5 | 4.5 | 4.5 | 4.5 | 4.5 |
| | Image density maintainability | | A | A | A | A | A | A | A | A | A | A |

[Table 2]

| | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| | Pigment | Pigment dispersion in which dispersing agent is crosslinked (numerical value denotes amount of pigment) | Pro-Jet Cyan APD1000 | 3.0 | 3.0 | 3.0 | 3.0 | | 3.0 | 3.0 | 3.0 | 3.0 | 3.0 |
| | | | Pro-Jet Black APD3000 | | | | | | | | | | |
| | | Pigment dispersion in which dispersing agent is not crosslinked (numerical value denotes amount of pigment) | FUJI SP BLUE 6633 | | | | | 3.0 | | | | | |
| | | | FUJI SP MAGENTA 948 8 | | | | | | | | | | |
| | Oxidant | | Hydrogen peroxide | 0.01 | 0.01 | 0.01 | 0.01 | 0.01 | 0.01 | 0.01 | 0.01 | 0.01 | 0.01 |
| | | | Peracetic acid | | | | | | | | | | |
| | | | Sodium percarbonate | | | | | | | | | | |
| | | | Urea peroxide | | | | | | | | | | |

(continued)

| | | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|
| Amount of active component in ink (parts by mass) | Organic solvent | Organic solvent represented by Formula 1 or Formula 2 | CLogP = 1.9 | Diethylene glycol monohexyl ether | 2.0 | 2.0 | 2.0 | 2.0 | 2.0 | | | | | 2.0 |
| | | | CLogP = 2.6 | Diethylene glycol mono-2-ethylhexyl ether | | | | | | 2.0 | | | | |
| | | | CLogP = 0.53 | 1,2-Hexanediol | | | | | | | | 2.0 | | |
| | | Other organic solvents | | Diethylene glycol isopropyl ether (CLogP = 0.08) | | | | | | | 2.0 | | | |
| | | | | 1,2-Butanediol (CLogP = -0.53) | | | | | | | | | 2.0 | |
| | | | | Propylene glycol | | | | | | | | | | 7.5 |
| | | | | Tripropylene glycol monomethyl ether | | | | | | | | | | 2.0 |
| | | | | SANNIX GP-250 | | | | | | | | | | 6.6 |
| | | | | PEG-200 | | | | | | | | | | 3.5 |
| | Adjuster | | | Urea | | | | | | | | | | |
| | | | | PVP K-15 | | | | | | | | | | |
| | | | | Tetrabutyl phosphonium hydroxide | | | | | | | | | | |
| | | | | Disodium bicinchoninate | | | | | | | | | | |
| | | | | Dimethylaminoethanol | | | | | | | | | | |
| | Colloidal silica | | | SNOWTEX XS | 0.1 | 0.1 | 0.1 | 0.1 | 0.1 | 0.1 | 0.1 | 0.1 | 0.1 | 0.1 |

(continued)

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| | Resin particles | Resin particles C-29 | | | | 6.0 | 6.0 | 6.0 | 6.0 | 6.0 | 6.0 | 6.0 |
| | | Resin particles C-30 | 6.0 | | | | | | | | | |
| | | Resin particles C-23 | | 6.0 | | | | | | | | |
| | | Resin particles C-24 | | | 6.0 | | | | | | | |
| | | Resin particles D | | | | | | | | | | |
| | | MOVINYL 972 | | | | | | | | | | |
| | Wax particles | TRASOL CN | 2.0 | 2.0 | 2.0 | | 2.0 | 2.0 | 2.0 | 2.0 | 2.0 | 2.0 |
| | | SELOSOL 524D | | | | 2.0 | | | | | | |
| | | HITEC E-6314 | | | | | | | | | | |
| | Silicone-based surfactant | BYK-347 | 0.1 | 0.1 | 0.1 | 0.1 | 0.1 | 0.1 | 0.1 | 0.1 | 0.1 | 0.1 |
| | | BYK-024 | | | | | | | | | | |
| | Fluorine-based surfactant | Capston FS-63 | | | | | | | | | | |
| | Acetylene glycol-based surfactant | OLFINE E1010 | | | | | | | | | | |
| | | OLFINE E1020 | | | | | | | | | | |
| | Total amount (parts by mass) | | 13.2 | 13.2 | 13.2 | 132 | 132 | 132 | 132 | 13.2 | 13.2 | 32.8 |
| | Weight proportion (%) of oxidant/fresin particles + wax) | | 0.13 | 0.13 | 0.13 | 0.13 | 0.13 | 0.13 | 0.13 | 0.13 | 0.13 | 0.13 |
| | pHi | | 8.7 | 8.7 | 9.0 | 8.5 | 8.6 | 8.8 | 8.8 | 8.8 | 8.8 | 8.8 |
| | ORPi (mV) | | 160 | 160 | 140 | 165 | 170 | 160 | 160 | 160 | 160 | 160 |
| | 285 - 59 × (pHi - 6.2) | | 138 | 138 | 120 | 149 | 143 | 132 | 132 | 132 | 132 | 132 |
| | ORPi - [285 - 59] × (pHi - 6.2)] | | 22 | 22 | 20 | 16 | 27 | 28 | 28 | 28 | 28 | 28 |
| | Dynamic surface tension at 10 milliseconds (mN/m) | | 36 | 36 | 36 | 36 | 36 | 36 | 54 | 44 | 54 | 36 |
| Evaluation | Property of suppressing ink flow passage wall containing silicon from being etched | | 5 | 5 | 5 | 5 | 5 | 5 | 5 | 5 | 5 | 5 |
| | Image density maintainability | | A | A | A | A | A | A | A | A | A | A |

[Table 3]

| | | | | Example 21 | Example 22 | Example 23 | Example 24 | Example 25 | Example 26 | Example 27 | Comparative Example 1 | Comparative Example 2 | Comparative Example 3 | Comparative Example 4 |
|---|---|---|---|---|---|---|---|---|---|---|---|---|---|---|
| | | Pigment dispersion in which dispersing agent is crosslinked (numerical value denotes amount of pigment) | Pro-Jet Cyan APD1000 | 3.0 | 3.0 | 3.0 | 3.0 | 3.0 | | | 3.0 | 3.0 | 3.0 | 3.0 |
| | | | Pro-Jet Black APD3000 | | | | | | | 2.0 | | | | |
| | Pigment | Pigment dispersion in which dispersing agent is not crosslinked (numerical value denotes amount of pigment) | FUJI SP BLUE 6633 | | | | | | 23 | 0.4 | | | | |
| | | | FUJI SP MAGENTA 9488 | | | | | | | 0.5 | | | | |
| | Oxidant | | Hydrogen peroxide | 0.01 | 0.01 | 0.01 | 0.01 | 0.1 | | | | 0.01 | | |
| | | | Peracetic aad | | | | | | | | | | | |
| | | | Sodium percarbonate | | | | | | | | | | | |
| | | | Urea peroxide | | | | | | | | | | | |

(continued)

| | | | | | Example 21 | Example 22 | Example 23 | Example 24 | Example 25 | Example 26 | Example 27 | Comparative Example 1 | Comparative Example 2 | Comparative Example 3 | Comparative Example 4 |
|---|---|---|---|---|---|---|---|---|---|---|---|---|---|---|---|
| Amount of active componentinink (parts by mass) | Organic solvent | Organic solvent represented by Formula 1 or Formula 2 | CLog P=1.9 | Diethylene glycol monohexyl ether | 2.0 | 2.0 | 23 | 2.3 | 2.0 | | | 2.0 | 2.0 | 2.0 | 2.0 |
| | | | CLog P=2.6 | Diethylene glycol mono-2-ethylhexyl ether | | | | | | | | | | | |
| | | | CLcgP = 0.53 | 1,2-Hexanediol | | | | | | | | | | | |
| | | Other organic solvents | | Diethylene glycol isopropyl ether (CLog P=0.08) | | | | | | | | | | | |
| | | | | 1,2-Butanediol (CLcg P=-0.53) | | | | | | | | | | | |
| | | | | Propylene glycol | | | 7.5 | 7.5 | | 0.1 | 2.4 | | | | |
| | | | | Tripropylene glycol mcnontlliyl ether | | | 2.0 | 2.0 | | 2.0 | 2.0 | | | | |
| | | | | SANNIX GP-250 | | | 6.6 | 6.6 | | 5.5 | 6.4 | | | | |
| | | | | PEG-200 | | | 3.5 | 3.5 | | 3.5 | 2.5 | | | | |
| | Adjuster | | | Urea | | 5.0 | 5.0 | 5.0 | | 5.0 | 5.0 | | | | |
| | | | | PVPK-15 | | 0.1 | 0.1 | 0.1 | | 0.1 | 0.1 | | | | |
| | | | | Tetrabutyl phosphonium hydroxide | | | | | | | | | | 0.01 | |
| | | | | Disodium bicinchoninate | | | | | | | | | | | 0.01 |
| | | | | Dimethylaminoethanol | | | | | | 0.05 | | | | | |

(continued)

| | | | Example 21 | Example 22 | Example 23 | Example 24 | Example 25 | Example 26 | Example 27 | Comparative Example 1 | Comparative Example 2 | Comparative Example 3 | Comparative Example 4 |
|---|---|---|---|---|---|---|---|---|---|---|---|---|---|
| | Colloidal silica | SNOWTEXXS | 0.1 | 0.1 | 0.1 | 0.1 | | 0.05 | 0.05 | | | | |
| | Resin particles | Resin particles C-29 | 6.0 | 6.0 | 6.0 | 3.3 | 6.0 | | | 6.0 | 6.0 | 6.0 | 6.0 |
| | | Resin particles C-30 | | | | | | | | | | | |
| | | Resin particles C-23 | | | | | | | | | | | |
| | | Resin particles C-24 | | | | | | | | | | | |
| | | Resin particles D | | | | | | 8.8 | 7.0 | | | | |
| | | MOVINYL972 | | | | | | | 2.0 | | | | |
| | Wax particles | TRASOLCN | 2.0 | 2.0 | 2.0 | 2.3 | | | | | | | |
| | | SELOSOL524D | | | | | | 3.0 | 2.0 | | | | |
| | | HITECE-6314 | | | | | 2.0 | | | 2.0 | 2.0 | 2.0 | 2.0 |
| | Silicone-based surfactant | BYK-347 | 0.1 | 0.1 | 0.1 | 0.1 | 0.1 | | | 0.1 | 0.1 | 0.1 | 0.1 |
| | | BYK-024 | | 0.01 | 0.01 | 0.01 | | 0.01 | 0.01 | | | | |
| | Fluorine-based surfactant | Capston FS-63 | | | | | | 0.01 | 0.01 | | | | |
| | Acetylene glycol-based surfactant | OLFINEE1010 | 0.3 | | 0.3 | 0.3 | | 0.3 | 0.3 | | | | |
| | | OLFINE E1020 | 1.0 | | 1.0 | 1.0 | | 1.0 | 1.0 | | | | |
| | Total amount (parts by mass) | | 14.5 | 18.3 | 39.5 | 37.1 | 132 | 31.6 | 33.6 | 13.1 | 13.1 | 13.1 | 13.1 |
| | Weight proportion(%) ofoxidant/(resin particles + wax) | | 0.13 | 0.13 | 0.13 | 0.18 | 1.25 | 0 | 0 | 0 | 0.13 | 0 | 0 |
| | pHi | | 8.8 | 8.8 | 8.8 | 8.6 | 8.5 | 8.3 | 8.2 | 8.8 | 8.8 | 8.8 | 8.8 |
| | ORPi (mV) | | 160 | 160 | 160 | 170 | 160 | 195 | 201 | 120 | 125 | 120 | 120 |
| | 285-59 × (pHi-6.2) | | 132 | 132 | 132 | 143 | 149 | 161 | 167 | 132 | 132 | 132 | 132 |

(continued)

| | | Example 21 | Example 22 | Example 23 | Example 24 | Example 25 | Example 26 | Example 27 | Comparative Example 1 | Comparative Example 2 | Comparative Example 3 | Comparative Example 4 |
|---|---|---|---|---|---|---|---|---|---|---|---|---|
| | ORPi-[285 - 59]×(pHi - 6.2)] | 28 | 28 | 28 | 27 | 11 | 34 | 34 | -12 | 17 | -12 | -12 |
| | Dynamic surface tensionat 10 milliseconds (mN/m) | 36 | 36 | 32 | 32 | 36 | 45 | 45 | 36 | 36 | 36 | 36 |
| Evaluation | Property of suppresing ink flow passage wall containing silicon from being etched | 5 | 5 | 5 | 5 | 4 | 5 | 5 | 1 | 2 | 1 | 1 |
| | Image density maintainability | A | A | A | A | A | A | A | C | B | C | C |

As listed in Tables 1 to 3, in Examples 1 to 27 in which the inks contained water, a pigment, and at least one of resin particles or wax particles and had a pH (that is, pHi in Inequality (X)) of 7.2 to 11 and Inequality (X), that is, "ORPi - [285 - 59 $\times$ (pHi - 6.2)] $\geq$ 0" was satisfied, etching of the ink flow passage wall containing silicon was suppressed.
On the contrary, in Comparative Examples 1 to 4 in which Inequality (X) was not satisfied, the property of suppressing the ink flow passage wall containing silicon from being etched was insufficient.
As shown in the results of Examples 1 to 3, it was found that in a case where the ink contained an oxidant (Example 1), the property of suppressing etching was further improved.
As shown in the results of Examples 2 and 3, it was found that in a case where the ink contained colloidal silica (Example 2), the property of suppressing etching was further improved.
Next, as a result of evaluation performed in the same manner as the evaluation described above except that the recording medium was changed to coated paper (trade name "FLO Gloss Text", manufactured by Sappi), the same results as the results of the evaluation described above (that is, the results listed in Tables 1 to 3) were obtained.
Further, as a result of evaluation performed in the same manner as the evaluation described above except that the recording medium was changed to coated paper (trade name "Condat Gloss", manufactured by LECTA), the same results as the results of the evaluation described above (that is, the results listed in Tables 1 to 3) were obtained.
Further, as a result of evaluation performed in the same manner as the evaluation described above except that the treatment liquid was changed to the treatment liquid 2, the same results as the results of the evaluation described above (that is, the results listed in Tables 1 to 3) were obtained.
Further, as a result of evaluation performed in the same manner as the evaluation described above except that the speed of image recording was changed to 5400 sph, the treatment liquid was not used, and the resolution was changed to 1200 dpi $\times$ 600 dpi, the same results as the results of the evaluation described above (that is, the results listed in Tables 1 to 3) were obtained.

[Example 101]

The same operation as in Example 24 was performed except that measurement of the viscosity of the ink and evaluation of the filter suitability of the ink described below were additionally performed.
That is, the composition of the ink in Example 101 is the same as the composition of the ink in Example 24.
The results are listed in Table 4.

<Measurement of viscosity of ink>

The viscosity (mPa·s) of the ink composition was measured under the conditions of 30°C and 100 revolutions per minute (rpm) using a rotational viscometer "VISCOMETER TV-22" (manufactured by TOKI SANGYO CO., LTD.).

<Evaluation of filter suitability of ink>

An Isopore membrane filter (manufactured by Merck Millipore Ltd.) having a pore diameter of 2 μm was placed in a syringe, and tubes serving as an ink flow passage were respectively connected to both ends of the syringe.
The ink was supplied to a tube connected to one end side of the syringe, and the ink was extruded with a pressure of 75 kPa such that the ink passed through the Isopore membrane filter in the syringe.
The amount (g) of the ink having passed through the filter until 100 seconds had elapsed from the start of ink extrusion was measured.
Based on the measurement results, the filter suitability of the ink was evaluated according to the following evaluation standards.
In the following evaluation standards, the rank at which the filter suitability of the ink is most excellent is "5".

- Evaluation standards for evaluation of filter suitability of ink -

5: The amount of the ink having passed through the filter was 80 g or greater.
4: The amount of the ink having passed through the filter was 60 g or greater and less than 80 g.
3: The amount of the ink having passed through the filter was 40 g or greater and less than 60 g.
2: The amount of the ink having passed through the filter was 20 g or greater and less than 40 g.
1: The amount of the ink having passed through the filter was less than 20 g.

[Examples 102 to 107]

The same operation as in Example 101 was performed except that the active components of the ink were changed as listed in Table 4.

The results are listed in Table 4.

In each ink of Examples 102 to 107, the cellulose nanofibers of the kind and the amount (% by mass with respect to the total amount of the ink) listed in Table 4 were added to the ink in Example 101.

Here, CELLENPIA TC-02X, CELLENPIA TC-01A, and CELLENPIA CS-01 are all cellulose nanofibers manufactured by Nippon Paper Industries Co., Ltd.

Among these cellulose nanofibers, CELLENPIA TC-02X and CELLENPIA TC-01A are TEMPO-oxidized cellulose nanofibers.

CELLENPIA TC-02X had an average fiber diameter of 3.5 nm and an average fiber length of 350 nm.

CELLENPIA TC-01A had an average fiber diameter of 3.5 nm and an average fiber length of 750 nm.

CELLENPIA CS-01 had an average fiber diameter of 13.5 nm and an average fiber length of 1500 nm or greater.

[Table 4]

| Example | | | | | Example 101 | Example 102 | Example 103 | Example 104 | Example 105 | Example 106 | Example 107 |
|---|---|---|---|---|---|---|---|---|---|---|---|
| | Pigment | Pigment dispersion in which dispersing agent is crosslinked (numerical value denotes amount of pigment) | | Pro-Jet Cyan APD 1000 | 3.0 | 3.0 | 3.0 | 3.0 | 3.0 | 3.0 | 3.0 |
| | Oxidant | | | Hydrogen peroxide | 0.01 | 0.01 | 0.01 | 0.01 | 0.01 | 0.01 | 0.01 |
| | Organic solvent | Organic solvent represented by Formula 1 or Formula 2 | CLog P = 1.9 | Diethylene glycol monohexyl ether | 2.3 | 2.3 | 2.3 | 2.3 | 2.3 | 2.3 | 2.3 |
| | | Other organic solvents | | Propylene glycol | 7.5 | 7.5 | 7.5 | 7.5 | 7.5 | 7.5 | 7.5 |
| | | | | Tripropylene glycol monomethyl ether | 2.0 | 2.0 | 2.0 | 2.0 | 2.0 | 2.0 | 2.0 |
| | | | | SANNIX GP-250 | 6.6 | 6.6 | 6.6 | 6.6 | 6.6 | 6.6 | 6.6 |
| | | | | PEG-200 | 3.5 | 3.5 | 3.5 | 3.5 | 3.5 | 3.5 | 3.5 |
| | Adjuster | | | Urea | 5.0 | 5.0 | 5.0 | 5.0 | 5.0 | 5.0 | 5.0 |
| | | | | PVPK-15 | 0.1 | 0.1 | 0.1 | 0.1 | 0.1 | 0.1 | 0.1 |
| | Colloidal silica | | | SNOWTEX XS | 0.1 | 0.1 | 0.1 | 0.1 | 0.1 | 0.1 | 0.1 |
| | Resin particles | | | Resin particles C-29 | 3.3 | 3.3 | 3.3 | 3.3 | 3.3 | 3.3 | 3.3 |

(continued)

| Example | | | Example 101 | Example 102 | Example 103 | Example 104 | Example 105 | Example 106 | Example 107 |
|---|---|---|---|---|---|---|---|---|---|
| Amount of active component in ink (parts by mass) | Wax particles | TRASOL CN | 2.3 | 2.3 | 2.3 | 2.3 | 2.3 | 2.3 | 2.3 |
| | Silicone-based surfactant | BYK-347 | 0.1 | 0.1 | 0.1 | 0.1 | 0.1 | 0.1 | 0.1 |
| | | BYK-024 | 0.01 | 0.01 | 0.01 | 0.01 | 0.01 | 0.01 | 0.01 |
| | Acetylene glycol-based surfactant | OLFINE E1010 | 0.3 | 0.3 | 0.3 | 0.3 | 0.3 | 0.3 | 0.3 |
| | | OLFINE E1020 | 0.1 | 0.1 | 0.1 | 0.1 | 0.1 | 0.1 | 0.1 |
| | Cellulose nanofibers | CELLENPIA TC-02X | | 0.20 | | | 0.10 | 0.30 | 0.46 |
| | | CELLENPIA TC-01A | | | 0.20 | | | | |
| | | CELLENPIA CS-01 | | | | 0.20 | | | |
| | Total amount (parts by mass) | | 37.1 | 37.1 | 37.1 | 37.1 | 37.1 | 37.1 | 37.1 |
| | Weight proportion (%) of oxidant/(resin particles + wax) | | 0.18 | 0.18 | 0.18 | 0.18 | 0.18 | 0.18 | 0.18 |
| | Weight proportion (%) of cellulose nanofibers/(resin particles + wax) | | 0 | 3.57 | 3.57 | 3.57 | 1.79 | 5.36 | 8.21 |
| | pHi | | 8.6 | 8.6 | 8.6 | 8.6 | 8.6 | 8.6 | 8.6 |
| | ORPi (mV) | | 170 | 170 | 170 | 170 | 170 | 170 | 170 |
| | 285 - 59 × (pHi - 6.2) | | 143 | 143 | 143 | 143 | 143 | 143 | 143 |
| | ORPi - [285 - 59] × (pHi - 6.2)] | | 27 | 27 | 27 | 27 | 27 | 27 | 27 |
| | Dynamic surface tension at 10 milliseconds (mN/m) | | 32 | 32 | 32 | 32 | 32 | 32 | 32 |

(continued)

| Example | | Example 101 | Example 102 | Example 103 | Example 104 | Example 105 | Example 106 | Example 107 |
|---|---|---|---|---|---|---|---|---|
| Evaluation | Property of suppressing ink flow passage wall containing silicon from being etched | 5 | 5 | 5 | 5 | 5 | 5 | 5 |
| | Image density maintainability | A | A | A | A | A | A | A |
| | Ink viscosity (mPa·s) | 4.5 | 5.5 | 5.5 | 5.5 | 5.0 | 6.0 | 6.8 |
| | Filter suitability | 5 | 5 | 4 | 3 | 5 | 5 | 4 |

As listed in Table 4, in Examples 101 to 107, the etching of the ink flow passage wall containing silicon was suppressed similarly to Examples 1 to 27.

Among Examples 101 to 107, the ink viscosity was effectively increased in Examples 102 to 107 in which the ink contained cellulose nanofibers. In this manner, the jettability of the ink is expected to be further improved.

As shown in the results of Examples 102 to 104, it can be seen that in a case where the cellulose nanofibers include TEMPO-oxidized cellulose nanofibers (Examples 102 and 103), the filter suitability of the ink is further improved.

The disclosure of JP2021-157230 filed on September 27, 2021 and the disclosure of JP2022-050285 filed on March 25, 2022 are incorporated in the present specification by reference. All documents, patent applications, and technical standards described in the present specification are incorporated herein by reference to the same extent as in a case of being specifically and individually noted that individual documents, patent applications, and technical standards are incorporated by reference.

## Claims

1. An ink jet ink which is jetted from an ink jet head having an ink flow passage wall containing silicon, the inkjet ink comprising:

   water;
   a pigment; and
   at least one of resin particles or wax particles,
   wherein the ink jet ink has a pH of 7.2 to 11, and
   Inequality (X) is satisfied,

   $$ORPi - [285 - 59 \times (pHi - 6.2)] \geq 0 \quad \text{Inequality (X)}$$

   in Inequality (X), ORPi represents an oxidation-reduction potential of the ink jet ink in units of mV, which is measured under a condition for a device in which an oxidation-reduction potential of water with a pH of 6.2 is 310 mV, and pHi represents the pH of the inkjet ink.

2. The ink jet ink according to claim 1, further comprising:
   an oxidant.

3. The inkjet ink according to claim 2,
   wherein the oxidant includes at least one selected from the group consisting of hydrogen peroxide and a peroxide.

4. The ink jet ink according to claim 2 or 3,
   wherein the oxidant includes at least one selected from the group consisting of hydrogen peroxide, peracetic acid, sodium percarbonate, and urea hydrogen peroxide.

5. The inkjet ink according to any one of claims 2 to 4,
   wherein a mass ratio of a content of the oxidant to a total content of the resin particles and the wax particles is in a range of 0.02% by mass to 6% by mass.

6. The inkjet ink according to any one of claims 1 to 5, further comprising:
   colloidal silica.

7. The inkjet ink according to any one of claims 1 to 6, further comprising:
   an organic solvent having a Clog P value of 1.0 to 3.5.

8. The ink jet ink according to claim 7,
   wherein the organic solvent having a Clog P value of 1.0 to 3.5 is at least one selected from the group consisting of a compound represented by Formula 1 and a compound represented by Formula 2,

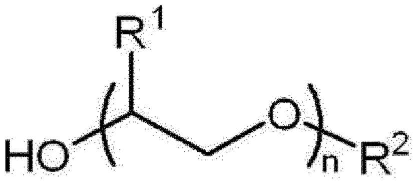 (1) 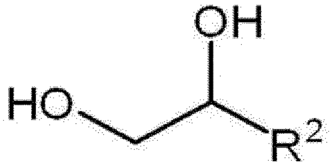 (2)

in Formula 1 or 2, $R^1$'s each independently represent a hydrogen atom or a methyl group, $R^2$'s each independently represent a linear or branched hydrocarbon group having 4 to 9 carbon atoms, or an aryl group having 6 to 10 carbon atoms, and n represents an integer of 1 to 3.

**9.** The inkjet ink according to any one of claims 1 to 8, further comprising:

a dispersing agent,
wherein the dispersing agent is crosslinked.

**10.** The ink jet ink according to any one of claims 1 to 9,
wherein the resin particles contain a resin having a structural unit represented by Formula 3,

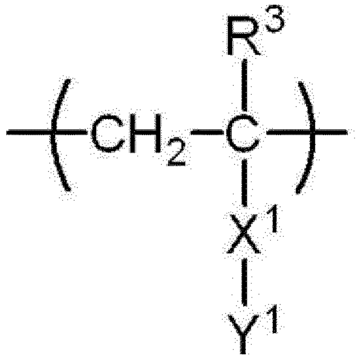 (3)

in Formula 3, $R^3$ represents a hydrogen atom or an alkyl group having 1 to 4 carbon atoms, $X^1$ represents a divalent linking group, $Y^1$ represents an anionic group, and an atom farthest from a main chain between $X^1$ and $Y^1$ is separated from the main chain by a distance of 4 atoms to 27 atoms.

**11.** The ink jet ink according to any one of claims 1 to 10, further comprising:
cellulose nanofibers.

**12.** The ink jet ink according to claim 11,
wherein the cellulose nanofibers have an average fiber width of 1 nm or greater and 10 nm or less.

**13.** The ink jet ink according to claim 11 or 12,
wherein the cellulose nanofibers have an average fiber length of 10 nm or greater and 1000 nm or less.

**14.** The ink jet ink according to any one of claims 11 to 13,
wherein the cellulose nanofibers are TEMPO-oxidized cellulose nanofibers.

**15.** The ink jet ink according to any one of claims 11 to 14,
wherein a mass ratio of a content of the cellulose nanofibers to a total content of the resin particles and the wax particles is in a range of 1.00% by mass to 10.00% by mass.

**16.** The ink jet ink according to any one of claims 11 to 15,
wherein a content of the cellulose nanofibers is in a range of 0.01% by mass to 1.00% by mass with respect to a total amount of the inkjet ink.

**17.** The ink jet ink according to any one of claims 11 to 16,
wherein a viscosity measured under conditions of 30°C and 100 rpm is in a range of 3.8 mPa·s to 6.0 mPa·s.

**18.** An image recording method comprising:
a step of jetting the ink jet ink according to any one of claims 1 to 17 from an ink jet head having an ink flow passage wall containing silicon to apply the inkjet ink onto a recording medium.

**INTERNATIONAL SEARCH REPORT**

International application No. **PCT/JP2022/027320**

**A. CLASSIFICATION OF SUBJECT MATTER**

***B41J 2/01***(2006.01)i; ***C09D 11/322***(2014.01)i; ***C09D 11/38***(2014.01)i; ***B41M 5/00***(2006.01)i
FI: C09D11/322; B41M5/00 120; C09D11/38; B41M5/00 100; B41M5/00 132; B41J2/01 501

According to International Patent Classification (IPC) or to both national classification and IPC

**B. FIELDS SEARCHED**

Minimum documentation searched (classification system followed by classification symbols)

B41J2/01; C09D11/322; C09D11/38; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-095088 A (RICOH CO., LTD.) 24 April 2008 (2008-04-24) claims, paragraphs [0008], [0020], [0027]-[0034], [0037]-[0041], [0043], [0056], [0087], [0107], examples | 1-3, 10, 17-18 |
| X | JP 2014-065249 A (FUJIFILM CORP.) 17 April 2014 (2014-04-17) claims, paragraphs [0006], [0072], [0088]-[0098], [0105], [0126]-[0129], examples | 1, 6, 10, 17-18 |
| A | US 2008/0171149 A1 (HASTIE GED) 17 July 2008 (2008-07-17) entire text | 1-18 |
| A | JP 10-060326 A (MATSUSHITA ELECTRIC INDUSTRIAL CO., LTD.) 03 March 1998 (1998-03-03) entire text | 1-18 |
| A | JP 2011-063000 A (FUJIFILM CORP.) 31 March 2011 (2011-03-31) entire text | 1-18 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 September 2022** | **27 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/027320**

| Patent document cited in search report | Publication date (day/month/year) | Patent family member(s) | Publication date (day/month/year) |
|---|---|---|---|
| JP 2008-095088 A | 24 April 2008 | US 2008/0254228 A1<br>claims, paragraphs [0008], [0060], [0061], [0069]-[0083], [0087]-[0111], [0114], [0133], [0193]-[0197], [0232], examples<br>WO 2008/032864 A1<br>EP 2061847 A1<br>CN 101370883 A<br>KR 10-2008-0091348 A | |
| JP 2014-065249 A | 17 April 2014 | (Family: none) | |
| US 2008/0171149 A1 | 17 July 2008 | WO 2005/113692 A1<br>entire text<br>EP 1756238 A1 | |
| JP 10-060326 A | 03 March 1998 | (Family: none) | |
| JP 2011-063000 A | 31 March 2011 | US 2011/0069118 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015063574 A
- JP 2003165936 A
- JP 2016044236 A
- JP 2011063000 A
- JP 2011111527 A
- JP 4902711 B
- JP 2002012607 A
- JP 2002188025 A
- JP 2003026978 A
- JP 2003342503 A
- JP 5017510 A
- JP H517510 A
- JP 2011162692 A
- JP 2015180710 A
- JP 2010221415 A
- JP 2011042150 A
- JP 2013001854 A
- JP 59157636 A
- JP S59157636 A
- JP 2003322926 A
- JP 2004325707 A
- JP 2004309806 A
- JP 2021157230 A
- JP 2022050285 A

### Non-patent literature cited in the description

- Encyclopedia of Pigments. 2000
- **W. HERBST ; K. HUNGER.** *Industrial Organic Pigments*
- **J. BRANDRUP ; E. H. IMMERGUT.** Polymer Handbook. Wiley-Interscience, 1989
- *Fiber and Industry,* 2004, vol. 60 (7), 376